(19) Europäisches Patentamt
European Patent Office
Office européen des brevets

(11) **EP 4 703 805 A1**

(12) **EUROPEAN PATENT APPLICATION**

(43) Date of publication:
**04.03.2026  Bulletin 2026/10**

(21) Application number: **25197827.6**

(22) Date of filing: **25.08.2025**

(51) International Patent Classification (IPC):
**G03G 15/00** (2006.01)  **G03G 21/18** (2006.01)

(52) Cooperative Patent Classification (CPC):
**G03G 15/757; G03G 21/1857; G03G 21/186**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.09.2024  JP 2024150795
02.09.2024  JP 2024150796**

(71) Applicant: **Canon Kabushiki Kaisha
Tokyo, 146-8501 (JP)**

(72) Inventor: **TAKEUCHI, Masaaki
Tokyo, 146-8501 (JP)**

(74) Representative: **TBK
Bavariaring 4-6
80336 München (DE)**

(54) **IMAGE FORMING APPARATUS**

(57)     An image forming apparatus includes a replaceable unit (P) including a driven portion (61, 63), and an apparatus body (1A) to which the replaceable unit (P) is detachably attached. The apparatus body (1A) includes (i) a driving unit (1Dd) including a drive source (301) and an output portion (302), (ii) a first drive transmission portion (1D1) connected to the output portion (302) and to the replaceable unit (P), and (iii) a second drive transmission portion (1D2) including an allowance mechanism (410, 500) and connected to the output portion (302) and to the replaceable unit (P). The allowance mechanism (410, 500) includes a first rotary member (410a, 500a) and a second rotary member (410b, 500b) and configured to transmit the driving force between the first rotary member (410a, 500a) and the second rotary member (410b, 500b).

FIG.13A

## Description

TECHNICAL FIELD

The present disclosure relates to an image forming apparatus that forms an image on a recording material.

BACKGROUND

Japanese Patent Application Laid-Open No. 2020-154313 discloses that a photosensitive drum of a cartridge attachable to and detachable from an apparatus body of an image forming apparatus is rotationally driven by a driving force of a motor disposed in the apparatus body while receiving a braking force generated by a braking member disposed in the apparatus body.

In the image forming apparatus described in the document described above, the braking member is attached to a support shaft fixed to a frame of the apparatus body. In addition, in the image forming apparatus described in the document described above, the driving force of the motor is transmitted through a transmission path that extends through a drum driving coupling, a drum coupling, a brake engagement member, and the braking member in this order and that is a non-loop transmission path terminated at the braking member.

SUMMARY

The present disclosure provides a new technique related to driving of a unit in an image forming apparatus.

The present disclosure in its first aspect provides an image forming apparatus as specified in claim 1. Optional features are specified in claim 2 to 9.

The present disclosure in its second aspect provides an image forming apparatus as specified in claim 10. Optional features are specified in claim 11 to 15.

Features of the present disclosure will become apparent from the following description of embodiments with reference to the attached drawings. The following description of embodiments is described by way of example.

According to the present disclosure, an image forming apparatus including a new element related to driving of a replaceable unit can be provided.

BRIEF DESCRIPTION OF THE DRAWINGS

FIG. 1 is a schematic diagram illustrating a sectional configuration of an image forming apparatus according to a first embodiment.
FIG. 2 is a schematic diagram illustrating a state in which a door of the image forming apparatus according to the first embodiment is open.
FIG. 3 is a perspective view of a cartridge according to the first embodiment.
FIG. 4 is an enlarged view of part of the cartridge according to the first embodiment.
FIGS. 5A to 5C are each an explanatory diagram of a body drive train according to the first embodiment.
FIGS. 6A and 6B are each an exploded view of a drive transmission unit according to the first embodiment.
FIG. 7A is a side view of the drive transmission unit according to the first embodiment.
FIG. 7B is an offset section view of the drive transmission unit according to the first embodiment.
FIGS. 8A to 8C are each a perspective view of part of the drive transmission unit according to the first embodiment.
FIG. 9 is a section view of the drive transmission unit and a drum coupling according to the first embodiment.
FIG. 10A is a diagram illustrating an engaged state of the drive transmission unit and the drum coupling according to the first embodiment.
FIG. 10B is a diagram illustrating an engaged state of a drive transmission unit and a drum coupling according to a second embodiment.
FIGS. 11A and 11B are each a diagram illustrating the operation of the body drive train according to the first embodiment.
FIG. 12 is a section view illustrating the operation of the body drive train according to the first embodiment.
FIG. 13A is a model diagram of the body drive train according to the first embodiment.
FIG. 13B is a model diagram of a body drive train according to a first reference example.
FIG. 13C is a model diagram of a body drive train according to a second reference example.
FIGS. 14A and 14B are each a diagram illustrating an operation of a body drive train according to a second embodiment.
FIG. 15 is an offset section view illustrating an operation of the body drive train according to the second embodiment.
FIG. 16 is a model diagram of the body drive train according to the second embodiment.
FIGS. 17A to 17D are each a schematic view of the body drive train according to the second embodiment.
FIGS. 18A and 18B are each a diagram illustrating an operation of a body drive train according to a third embodiment.
FIG. 19 is an offset section view illustrating an operation of the body drive train according to the third embodiment.
FIG. 20 is a model diagram of the body drive train according to the third embodiment.
FIG. 21A is a model diagram of a body drive train according to a fourth embodiment.

FIG. 21B is a schematic view of a planetary gear mechanism according to the fourth embodiment.

FIGS. 22A and 22B are each a diagram illustrating an operation of a body drive train according to another embodiment.

DESCRIPTION OF THE EMBODIMENTS

Embodiments of the present disclosure will be described below with reference to drawings.

First Embodiment

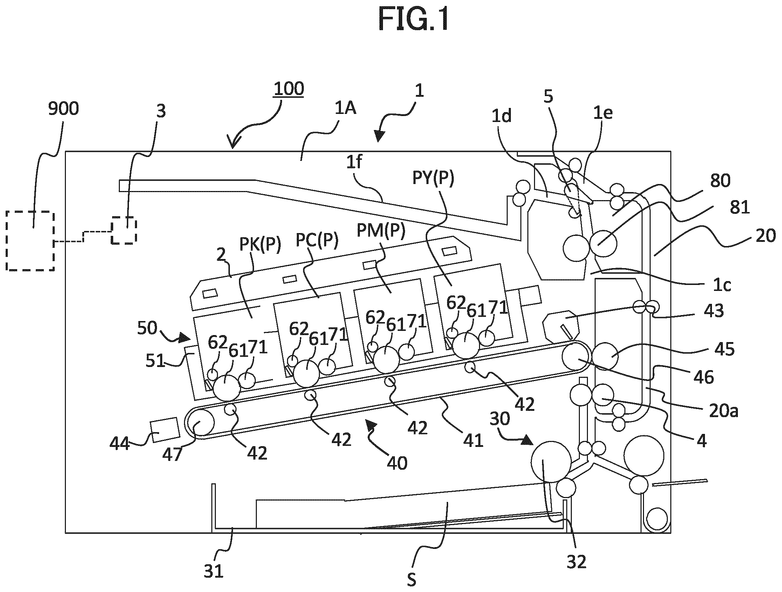

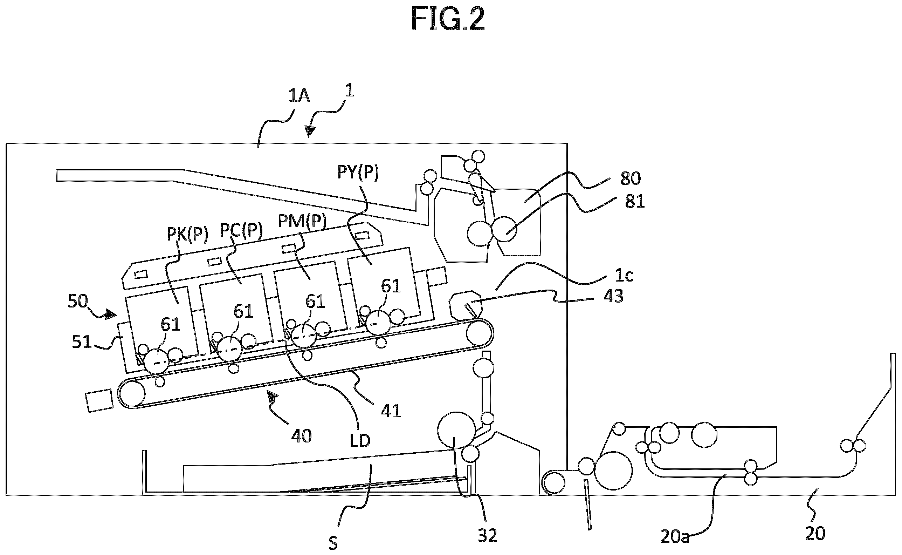

A printer 1 serving as an image forming apparatus according to an embodiment (first embodiment) of the present disclosure will be described with reference to FIGS. 1 and 2. FIG. 1 is a schematic diagram illustrating a sectional configuration of the entirety of the printer 1 according to the present embodiment. FIG. 2 is a schematic diagram illustrating a state in which a door 20 of the printer 1 is open.

The printer 1 according to the present embodiment is a color laser beam printer of an electrophotographic system that forms an image on a sheet S. As a sheet serving as a recording material (recording medium), various sheet materials of different sizes and materials can be used. Examples of the sheet materials include paper sheets such as plain paper sheets and cardboards, surface-treated sheet materials such as coated paper sheets, sheet materials of irregular shapes such as envelopes and index paper sheets, plastic films, and cloths.

The printer 1 includes an apparatus body (casing) 1A, a scanner (exposing unit) 2, a controller 3, and the door (opening/closing member) 20 openable and closable with respect to the apparatus body 1A. Further, the printer 1 includes a sheet feeding portion 30, a transfer unit (transfer device) 40, a tray unit (moving unit, support unit) 50, and a fixing unit 80. A portion including the apparatus body 1A and the door 20 can be also referred to as a main frame 100. The main frame 100 includes an exterior portion of the printer 1.

The apparatus body 1A includes the scanner 2, the controller 3, the sheet feeding portion 30, the transfer unit 40, the tray unit 50, and the fixing unit 80.

The sheet feeding portion 30 includes a stacking tray 31 on which sheets S are stacked, and a feed roller 32 serving as a feeding member that feeds the sheet S. The stacking tray 31 is configured such that the sheets S can be replenished by drawing out the stacking tray 31 from the apparatus body 1A in a direction in which the door 20 is opened (rightward in FIG. 1).

The tray unit 50 includes a tray (support member, drawer) 51, and cartridges PY, PM, PC, and PK. The cartridges PY, PM, PC, and PK are detachably attached to the tray 51. In the present embodiment, the cartridges PY, PM, PC, and PK are each attachable to and detachable from the tray 51 independently from each other.

The cartridges PY, PM, PC, and PK respectively store toners (developers) of yellow (Y), magenta (M), cyan (C), and black (K). The cartridges PY, PM, PC, and PK have the same configuration except for the color of the toner stored therein. Therefore, the configuration and operation of one of the cartridges PY, PM, PC, and PK will be described, and description of other ones may be omitted. In addition, when the cartridges PY, PM, PC, and PK do not need to be distinguished from each other, the cartridges PY, PM, PC, and PK may be simply referred to as cartridges P. It can be said that the tray unit 50 includes a plurality of cartridges P and the tray 51 to which the plurality of cartridges P are detachably attached.

The cartridge P is an example of a replaceable unit detachably (replaceably) attached to the apparatus body 1A. The cartridge P in the present embodiment is a part of the tray unit 50, and is detachably attached to the apparatus body 1A via the tray 51. However, the cartridge P may be detachably attached to the apparatus body 1A without the tray 51 therebetween.

In addition, instead of the cartridge P, a unit (module, driven unit, driven module) having a function similar to the cartridge P may be attached to the apparatus body 1A in a manner in which attachment and detachment (replacement) by a user or the like is not expected. That is, the cartridge P is an example of a "unit" that is not necessarily detachable from the apparatus body 1A. To be noted, in the case of a cartridge P (fixed process unit) undetachably fixed to the apparatus body 1A, a developing unit may be replenished with toner from the outside of the printer 1 by using a replenishment container.

In the present embodiment, the tray unit 50 includes a plurality of photosensitive drums (image bearing member) 61, a plurality of charging rollers 62 (charging members), and a plurality of developing rollers (developer bearing members) 71. Specifically, the tray unit 50 of the present embodiment includes four photosensitive drums 61, four charging rollers 62, and four developing rollers 71. The rotation axis direction of the photosensitive drum 61, the rotation axis direction of the developing roller 71, and the rotation axis direction of the charging roller 62 are parallel. The photosensitive drum 61 is an example of a rotary member that is rotatably provided in the cartridge P.

In the tray unit 50, a portion that forms a black (K) image will be referred to as a black station (first station), and the photosensitive drum 61, developing roller 71, and charging roller 62 of the first station will be respectively referred to as a first photosensitive drum, a first developing roller, and a first charging roller. In the tray unit 50, a portion that forms a cyan (C) image will be referred to as a cyan station (second station), and the photosensitive drum 61, developing roller 71, and charging roller 62 of the second station will be respectively referred to as a second photosensitive drum, a second developing roller, and a second charging roller. In the tray unit 50, a portion that forms a magenta (M) image will be referred to as a magenta station (third station), and the photosensitive drum 61, developing roller 71, and charging roller 62 of the third station will be respectively referred to as a third photosensitive drum, a third developing roller, and a third charging roller. In the tray unit 50, a portion that forms a yellow (Y) image will be referred to as a yellow station (fourth station), and the photosensitive drum 61, developing roller 71, and charging roller 62 of the fourth station will be respectively referred to as a fourth photosensitive drum, a fourth developing roller, and a fourth charging roller.

The cartridge PK, the cartridge PC, the cartridge PM, and the cartridge PY are respectively attached to the black station, the cyan station, the magenta station, and the yellow station. In the present embodiment, the cartridge PK, the cartridge PC, the cartridge PM, and the cartridge PY will be respectively referred to as a first cartridge, a second cartridge, a third cartridge, and a fourth cartridge.

To be noted, the ordinal numbers such as first, second, third, and fourth are used for the sake of convenience of description. It suffices as long as the photosensitive drum 61, the charging roller 62, and the developing roller 71 are provided in either one of the cartridge P and the tray 51. In the present embodiment, the cartridge P includes the photosensitive drum 61, the charging roller 62, and the developing roller 71.

The transfer unit 40 includes a belt 41, a primary transfer roller 42, a cleaning portion 43, a driving roller 46 that drives the belt 41, and a tension roller 47. In the printer 1 of the present embodiment, an optical sensor 44 that detects a toner image transferred onto the belt 41 is disposed. In the present embodiment, the belt 41 is disposed below the four photosensitive drums 61, and is capable of abutting the photosensitive drums 61 such that a primary transfer portion is formed between each part between the belt 41 and the photosensitive drums 61. In addition, the printer 1 includes a secondary transfer roller 45 that abuts the belt 41 such that a secondary transfer portion is formed. The secondary transfer portion is formed between the belt 41 and the secondary transfer roller 45. The rotation axis direction of the primary transfer roller 42, the rotation axis direction of the driving roller 46, the rotation axis direction of the tension roller 47, and the rotation axis direction of the secondary transfer roller 45 are parallel. A registration roller pair 4 is disposed at a position upstream of the secondary transfer portion.

A fixing unit 80 includes a fixing portion 81 and a switching guide 5. The fixing unit 80 is accommodated inside the apparatus body 1A. The fixing portion 81 is a unit of a thermal fixation system that heats and pressurizes an image on a sheet S while conveying the sheet S in an image forming operation. In the present embodiment, the fixing portion 81 includes a heating portion (heating roller) including a heater, and a pressurizing portion (pressurizing roller).

Image Forming Operation

An image forming operation that is a series of operations for forming an image on a sheet S while the printer 1 conveys the sheet S will be described with reference to FIG. 1. The controller 3 of the printer 1 starts the image forming operation on the basis of image information received from an external host apparatus 900. The external host apparatus 900 is, for example, a personal computer, an image reader, or a facsimile machine.

When the image forming operation is started, the rotational driving of each photosensitive drum 61 and the belt 41 is started. A charging voltage is applied to each charging roller 62, and thus the surface of the corresponding ones of the photosensitive drums 61 is charged. The scanner 2 is driven on the basis of the image information to irradiate the photosensitive drum 61 with laser light from the scanner 2, and thus the surface of the photosensitive drum 61 is exposed. As a result of this, an electrostatic latent image corresponding to the image information is formed on the surface of the photosensitive drum 61.

The developing roller 71 rotates while bearing toner. A developing voltage is applied to the developing roller 71. The electrostatic latent image formed on the photosensitive drum 61 is developed by the toner supplied from the developing roller 71, and thus a toner image is formed on the surface of the photosensitive drum 61. When a full-color image is formed, toner images of respective colors are formed on the four photosensitive drums 61. In the present embodiment, the developing roller 71 develops the electrostatic latent image in the state of abutting the photosensitive drum 61, but the developing roller 71 may develop the electrostatic latent image in a state in which there is a gap between the developing roller 71 and the photosensitive drum 61.

To be noted, in the present embodiment, the developing roller 71 is movable between a contact position where the developing roller 71 abuts the photosensitive drum 61 and a separation position where the developing roller 71 is separated from the photosensitive drum 61. Specifically, a state in which the developing roller 71 is at the contact position and a state in which the developing roller 71 is at the separation position are switched by a switching unit provided in the apparatus body 1A. As a result of this, in a state in which the image forming operation is not performed, the developing roller 71 can be separated from the photosensitive drum 61.

In addition, the printer 1 can form a monochromatic image in a state in which the developing roller 71 and the photosensitive drum 61 corresponding to the cartridge PK are in contact with each other and the developing rollers 71 and the photosensitive drums 61 respectively corresponding to the cartridges PY, PM, and PC are separated from each other. In addition, the printer 1 can form a full-color image in a state in which the photosensitive drums 61 corresponding to the cartridges PY, PM, PC, and PK are in contact with the belt 41.

The toner image formed on each photosensitive drum 61 is transferred onto the belt 41 by the primary transfer roller 42 at the primary transfer portion, and is conveyed toward the secondary transfer portion formed by the belt 41 and the secondary transfer roller 45.

Meanwhile, in the apparatus body 1A, a conveyance path (first path, first conveyance path) 1c that the sheet S moving toward the fixing unit 80 passes through is formed. In addition, in the door 20, a duplex conveyance path (second path, second conveyance path) 20a that the sheet S having passed through the fixing unit 80 passes through is formed. The door 20 covers the conveyance path 1c in a closed state. As a result of opening the door 20, the conveyance path 1c and the duplex conveyance path 20a are exposed to the outside of the printer 1 (FIG. 2).

In parallel with the formation of the toner image described above, in the sheet feeding portion 30, one sheet S is fed at a predetermined timing by the feed roller 32 from the sheets S stacked on the stacking tray 31. The fed sheet S is conveyed toward the secondary transfer portion through the conveyance path 1c. In the secondary transfer portion, the toner image is transferred onto the sheet S from the belt 41. Toner not transferred onto the sheet S is removed from the belt 41 by a cleaning blade (cleaning member) provided in the cleaning portion 43.

The sheet S onto which the toner image has been transferred in the secondary transfer portion is conveyed toward the fixing unit 80. In the fixing unit 80, the sheet S is heated and pressurized in the fixing portion 81, and thus the toner image is fixed to the sheet S. The sheet S to which the toner image has been fixed is conveyed toward the switching guide 5 serving as a path switching portion.

The switching guide 5 is movable to a discharge position where the switching guide 5 guides the sheet S having passed through the fixing portion 81 toward a discharge path 1d and a reverse position where the switching guide 5 guides the sheet S toward a reverse conveyance path 1e. In the case of simplex printing in which an image is formed on only one surface of the sheet S, the sheet S is guided to the discharge path 1d by the switching guide 5, and is discharged onto a discharge tray 1f formed in the upper portion of the apparatus body 1A. In contrast, in the case of duplex printing in which an image is formed on each of a first surface and a second surface of the sheet S, the sheet S on the first surface of which an image has been formed by passing through the secondary transfer portion and the fixing portion 81 is guided to the reverse conveyance path 1e by the switching guide 5. After the sheet S is guided to the reverse conveyance path 1e, the conveyance direction of the sheet S is reversed, and the sheet S is conveyed toward the secondary transfer portion again through the duplex conveyance path 20a formed in the door 20. Then, the sheet S on the second surface of which an image has been formed by passing through the secondary transfer portion and the fixing portion 81 is guided to the discharge path 1d by the switching guide 5 and discharged onto the discharge tray 1f.

Cartridge

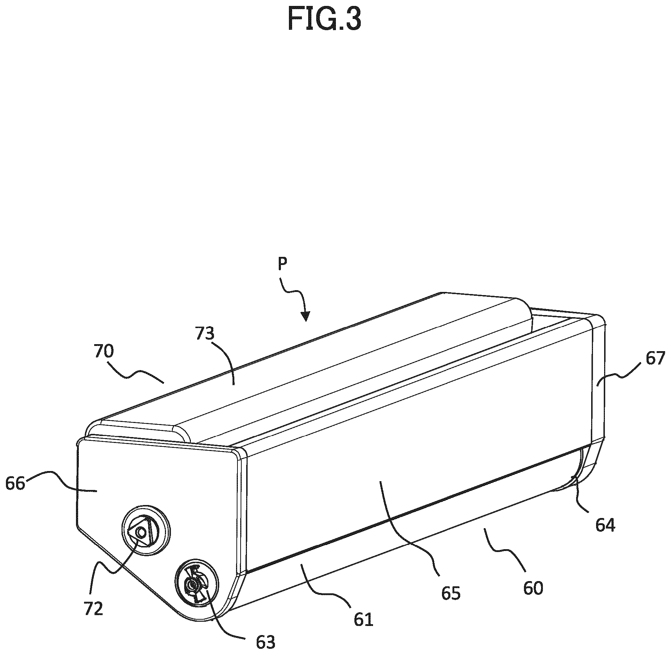

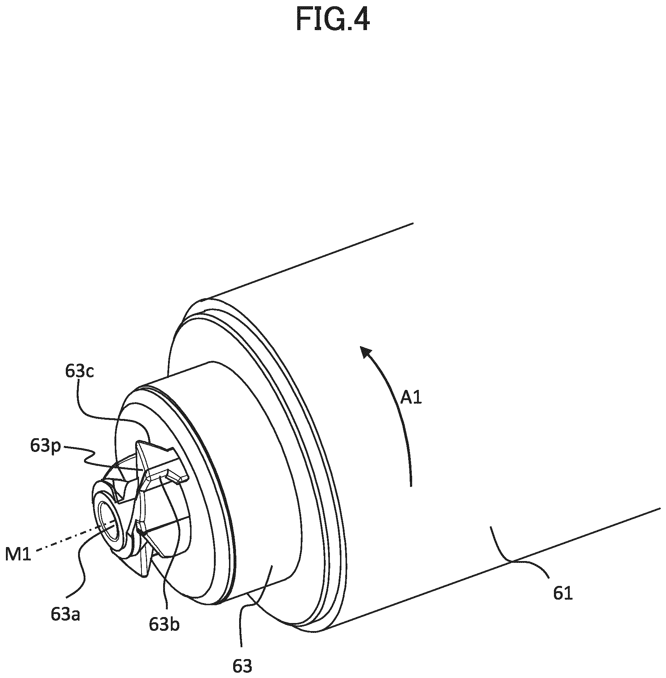

The configuration of the cartridge P will be described with reference to FIGS. 3 and 4. FIG. 3 is a perspective view of the entirety of the cartridge P. FIG. 4 is a perspective view of the vicinity of the drum coupling 63. The direction of the rotation axis of the photosensitive drum 61 that the cartridge P includes will be referred to as a longitudinal direction of the cartridge P. To be noted, "photosensitive drum 61" in the description below refers to arbitrary one of one or more (four in the present embodiment) photosensitive drums 61 included in the printer 1.

As illustrated in FIG. 3, the cartridge P is constituted by a drum unit 60 and a developing unit 70. A first side cover 66 and a second side cover 67 are fixed to respective ends of the drum unit 60 in the longitudinal direction of the cartridge P. The developing unit is rotatably supported by the first side cover 66 and the second side cover 67.

The drum unit 60 is constituted by the photosensitive drum 61, the charging roller 62, a drum frame member 65 serving as a first frame member, and the like. A drum coupling 63 and a drum flange 64 are fixed to the photosensitive drum 61. The drum coupling 63 is rotatably supported by the first side cover 66, and the drum flange 64 is rotatably supported by the second side cover 67. Other than these, a cleaning portion (for example, a cleaning blade or the like) for removing residual toner remaining on the surface of the photosensitive drum 61 may be disposed in the drum unit 60. The drum unit 60 of the present embodiment does not include a cleaning portion.

The developing unit 70 is constituted by the developing roller 71, a toner supply roller, a developing blade, a developing coupling 72, a developing frame member 73, and the like. The toner supply roller supplies toner in a toner storage space formed inside the developing frame member 73 to the developing roller 71. The developing blade abuts the outer peripheral surface of the developing roller 71 at a predetermined contact pressure, regulates the layer thickness of the toner borne on the developing roller 71, and rubs the toner to charge the toner. The developing coupling 72 is a drive input portion by which the developing unit 70 receives a driving force from the apparatus body 1A.

The drum coupling 63 is engaged with a drive transmission unit 200 of the apparatus body 1A that will be described later, and rotates by receiving a driving force of a motor 301. The drum coupling 63 of the present embodiment is disposed coaxially with photosensitive drum 61, but the drum coupling 63 may be a member that rotates about an axis different from the rotation axis of the photosensitive drum 61.

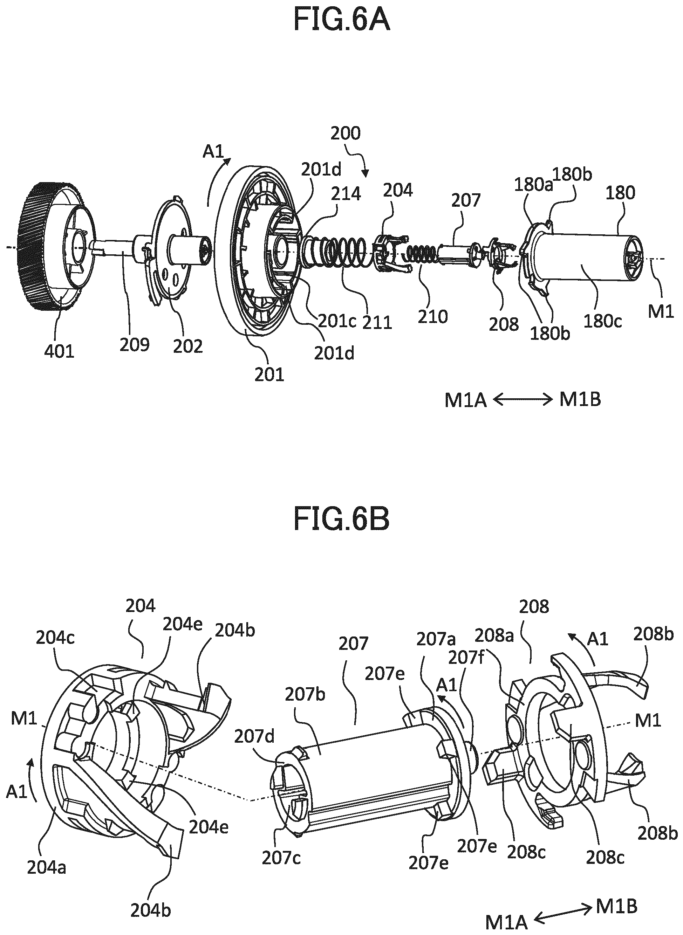

As illustrated in FIG. 4, the drum coupling 63 includes a circular hole portion 63a, a first force receiving portion 63b, and a second force receiving portion 63c. The circular hole portion 63a is configured to be engageable with a positioning boss 180i (FIG. 6) of the drive transmission unit 200. The first force receiving portion 63b is configured to receive a driving force from the drive transmission unit 200. The second force receiving portion 63c is configured to receive a braking force from the drive transmission unit 200.

In the present embodiment, the first force receiving portion 63b and the second force receiving portion 63c are both provided on a protrusion portion 63p formed at an end portion of the drum coupling 63 in the axial direction. The first force receiving portion 63b is a surface of the protrusion portion 63p facing upstream in a normal rotation direction A1, and the second force receiving portion 63c is a surface of the protrusion portion 63p facing downstream in the normal rotation direction A1.

As described above, the cartridge P includes a driven portion driven by the motor 301. The driven portion includes a force receiving portion that is engaged with a member included in a body drive train 1D of the apparatus body 1A and receives a force from the body drive train 1D, and a driving target that is driven by a force transmitted thereto via the force receiving portion. The force receiving portion of the cartridge P in the present embodiment is the first force receiving portion 63b and the second force receiving portion 63c of the drum coupling 63. The driving target of the motor 301 in the cartridge P of the present embodiment includes the photosensitive drum 61.

To be noted, the driving target of the cartridge P may be a member different from the photosensitive drum 61.

The driven portion of the cartridge P includes a rotary member, and the rotation direction (first rotation direction) of the rotary member during image formation (during execution of the image forming operation described above) will be referred to as a normal rotation direction A1. That is, the driven portion of the cartridge P includes the rotary member that is rotated in the normal rotation direction A1 (first rotation direction) when the driven portion of the cartridge P is driven by the drive source (motor 301) of the apparatus body 1A. The drum coupling 63 is an example of the rotary member, but the "rotary member" is not limited to the drum coupling 63, and may be, for example, the photosensitive drum 61.

The cartridge P (replaceable unit, replaceable module) of the present embodiment receives a driving force (first force) acting in the normal rotation direction A1 (first rotation direction) on the drum coupling 63 (rotary member) from a first drive transmission portion 1D1 of the body drive train 1D that will be described later. In addition, the cartridge P (replaceable unit) of the present embodiment receives a braking force (second force) acting in a direction (second rotation direction) opposite to the normal rotation direction A1 on the drum coupling 63 (rotary member) from a second drive transmission portion 1D2 of the body drive train 1D that will be described later.

The force (driving force, first force) that the first force receiving portion 63b receives from the first drive transmission portion 1D1 of the body drive train 1D during image formation acts on the drum coupling 63 in the normal rotation direction A1. The force (braking force, second force) that the second force receiving portion 63c receives from the second drive transmission portion 1D2 of the body drive train 1D during image formation acts on the drum coupling 63 in a reverse rotation direction (second rotation direction) opposite to the normal rotation direction A1. That is, the cartridge P (replaceable unit) of the present embodiment includes the first force receiving portion 63b (first surface) that receives a driving force (first force) from the first drive transmission portion 1D1 and the second force receiving portion 63c (second surface) that receives a braking force (second force) from the second drive transmission portion 1D2.

Body Drive Train

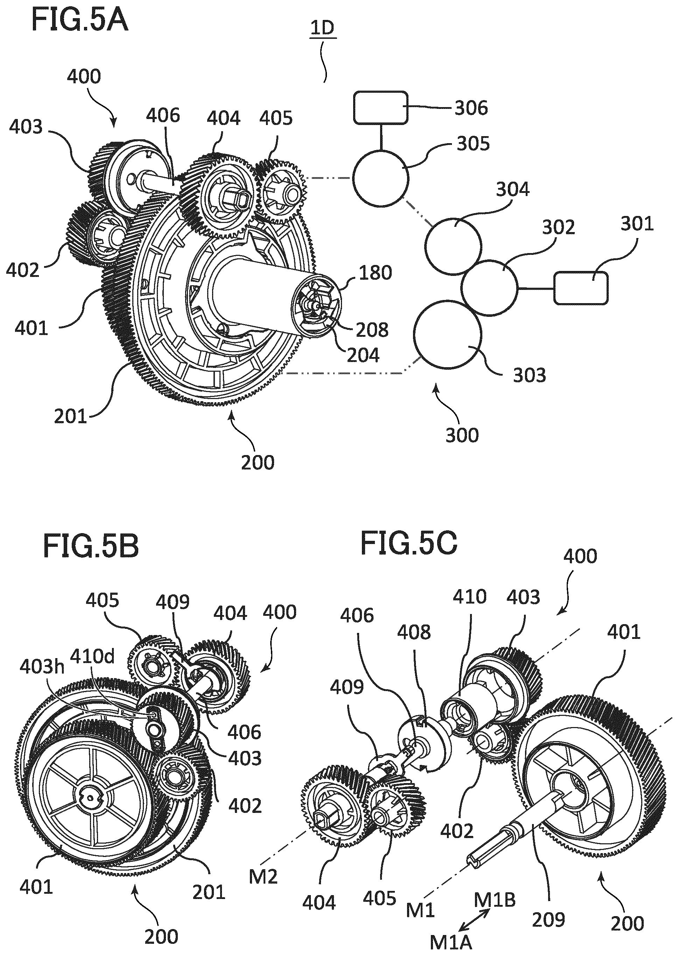

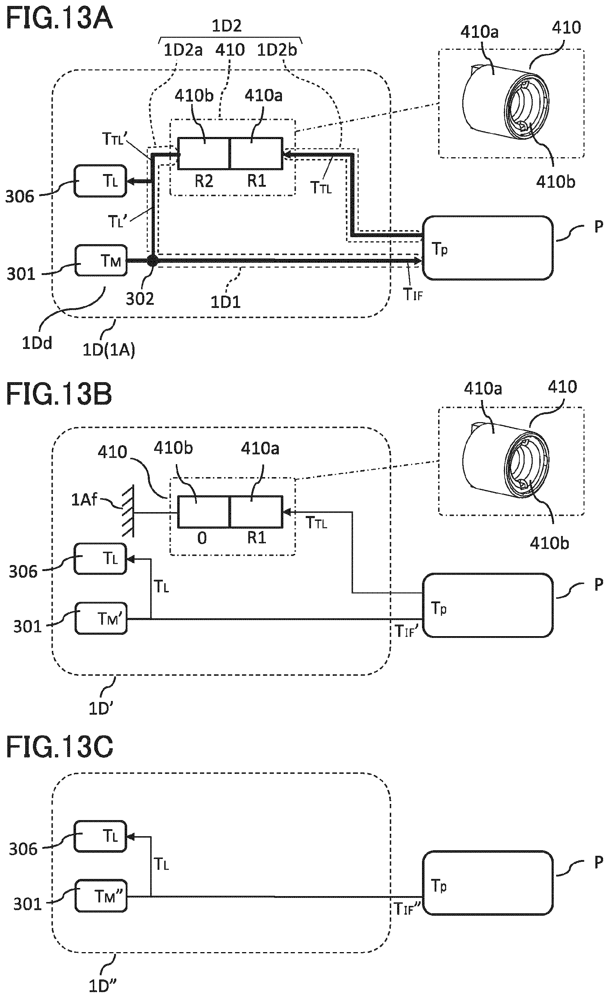

Next, the body drive train 1D provided in the apparatus body 1A of the present embodiment will be described. First, the summary of the body drive train 1D will be described with reference to FIG. 13A, and then the configuration of the body drive train 1D of the present embodiment will be described mainly with reference to FIGS. 5A to 8C.

Summary of Body Drive Train

FIG. 13A is a model diagram illustrating a drive transmission path from the motor 301 to the cartridge P in the present embodiment. The apparatus body 1A of the present embodiment includes the body drive train 1D serving as a driving unit (driving mechanism) that drives the cartridge P and the like by using a driving force of the motor 301. The motor 301 drives the cartridge P.

The body drive train 1D roughly includes a driving device 1Dd, the first drive transmission portion 1D1 (first drive transmission path, first driving force transmitter), and the second drive transmission portion 1D2 (second drive transmission path, second driving force transmitter). The driving device 1Dd includes the motor 301 serving as a drive source that generates a driving force, and a branching gear (output gear) 302 serving as an output portion that outputs the driving force of the motor 301. The first drive transmission portion 1D1 is connected to the branching gear 302 (output portion) and to the cartridge P (replaceable unit). The second drive transmission portion 1D2 includes a torque limiter 410 (allowance mechanism, differential mechanism), and is connected to the branching gear 302 (output portion) and to the cartridge P (replaceable unit).

The first drive transmission portion 1D1 and the second drive transmission portion 1D2 are connected to each other via the cartridge P. Therefore, the transmission path for the driving force of the motor 301 in the printer 1 of the present embodiment includes a closed loop. This closed loop includes the branching gear 302 (output portion), the first drive transmission portion 1D1, the second drive transmission portion 1D2 including the torque limiter 410 (allowance mechanism, differential mechanism), and the drum coupling 63 (driven portion, driven coupling) of the cartridge P.

The first drive transmission portion 1D1 and the second drive transmission portion 1D2 each couple the branching gear 302 (output portion) to the cartridge P in parallel. In other words, the first drive transmission portion 1D1 and the second drive transmission portion 1D2 each include a member (a first drive gear 303 and a second drive gear 304 in the present embodiment) engaged with the branching gear 302 (output portion). In addition, the first drive transmission portion 1D1 and the second drive transmission portion 1D2 each include a member (body-side coupling 180 and engagement member (204, 208) in the present embodiment) engaged with the cartridge P. In the present embodiment, the first drive gear 303 and the second drive gear 304 are directly engaged with the branching gear 302, and the body-side coupling 180 and the engagement member (204, 208) are directly engaged with the drum coupling 63 (driven portion).

The second drive transmission portion 1D2 of the present embodiment can be divided into a motor-side transmission portion 1D2a (drive source-side transmission portion, drive source-side transmitter) and a cartridge-side transmission portion 1D2b (unit-side transmission portion, unit-side transmitter) at the torque limiter 410. The motor-side transmission portion 1D2a is connected to the branching gear 302 and to an inner ring 410b of the torque limiter 410. The cartridge-side transmission portion 1D2b is connected to an outer ring 410a of the torque limiter 410 and to the drum coupling 63 of the cartridge P.

To be noted, the outer ring 410a may be connected to the motor-side transmission portion 1D2a and the inner ring 410b may be connected to the cartridge-side transmission portion 1D2b. In addition, the outer ring 410a and inner ring 410b of the torque limiter 410 or a member that integrally rotates with the outer ring 410a/inner ring 410b may be directly engaged with the cartridge P without another gear or the like therebetween.

The first drive transmission portion 1D1 of the present embodiment transmits force between the branching gear 302 and the drum coupling 63 (FIG. 4) of the cartridge P, and mainly transmits the driving force of the motor 301 from the former to the latter. The motor-side transmission portion 1D2a of the second drive transmission portion 1D2 of the present embodiment transmits force between the branching gear 302 and the inner ring 410b of the torque limiter 410. In addition, the cartridge-side transmission portion 1D2b of the second drive transmission portion 1D2 of the present embodiment transmits force between the outer ring 410a of the torque limiter 410 and the drum coupling 63 of the cartridge P.

The first drive transmission portion 1D1 and the second drive transmission portion 1D2 can transmit the driving force of the motor 301 to a driving target unit other than the cartridge P in the printer 1. The motor-side transmission portion 1D2a of the second drive transmission portion 1D2 in the present embodiment is connected to a load member 306, and can transmit the driving force of the motor 301 to the load member 306. For example, the load member 306 is a conveyance roller (for example, feed roller 32 or registration roller pair 4) for conveying the sheet S.

Configuration of Body Drive Train

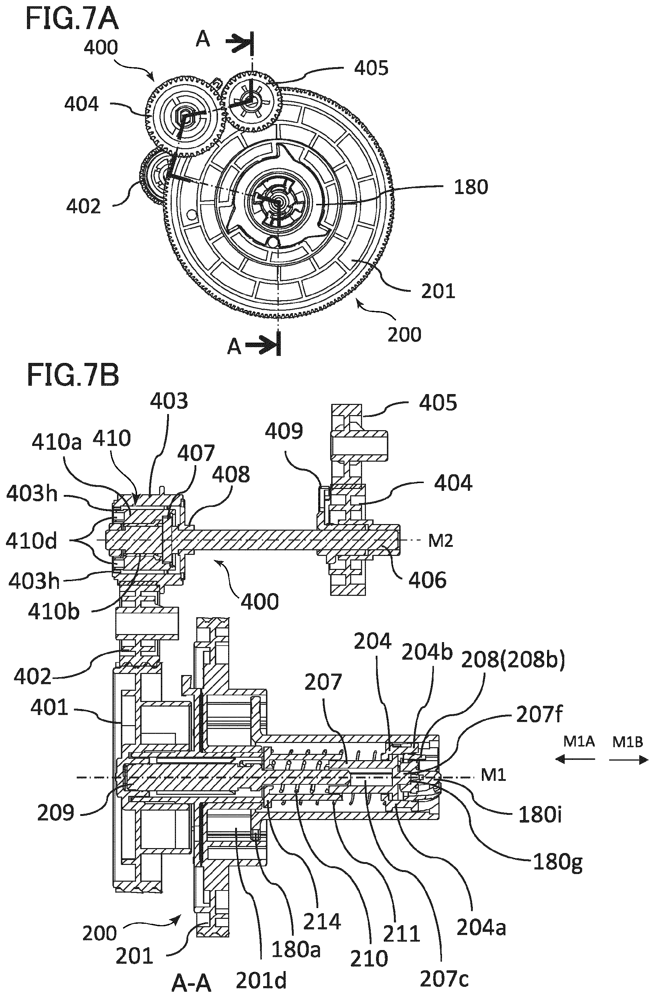

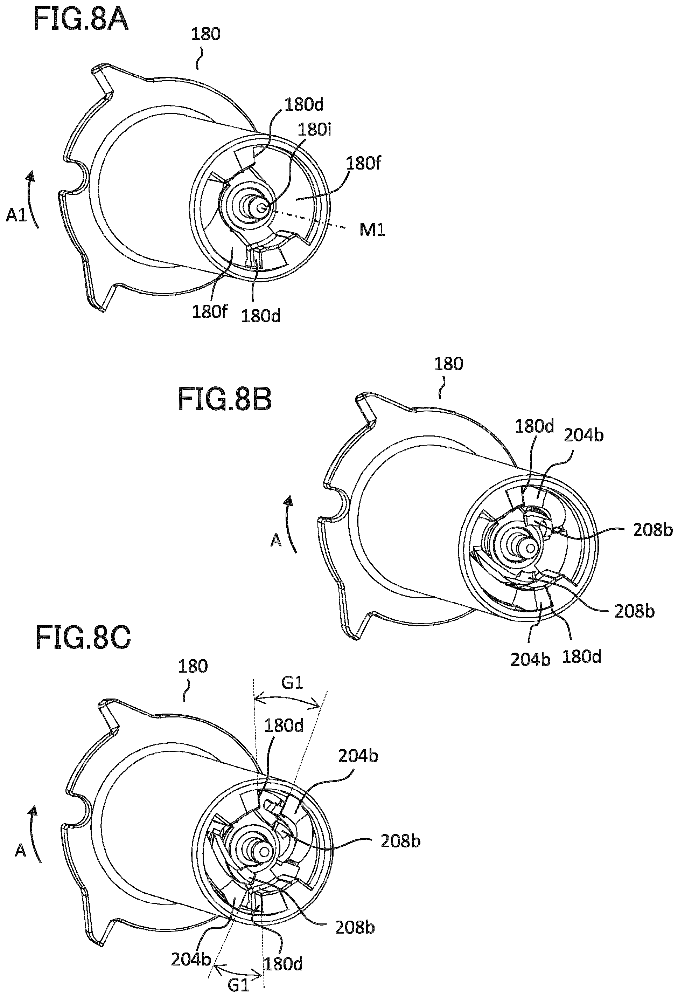

The configuration of the body drive train 1D in the present embodiment will be described. FIG. 5A is a diagram illustrating the body drive train 1D, and is a diagram combining a perspective view of part of the body drive train 1D (drive transmission unit 200 and differential mechanism portion 400) as viewed from the front side and a schematic diagram illustrating other elements of the body drive train 1D. FIG. 5B is a perspective view of the drive transmission unit 200 and the differential mechanism portion 400 as viewed from the rear side. FIG. 5C is an exploded perspective view of the differential mechanism portion 400. FIG. 6A is an exploded perspective view of the drive transmission unit 200. FIG. 6B is an exploded perspective view illustrating part of the drive transmission unit 200 in an enlarged manner. FIG. 7A is a diagram illustrating the drive transmission unit 200 and the differential mechanism portion 400 as viewed from the front side. FIG. 7B is an offset section view of the drive transmission unit 200 and the differential mechanism portion 400 taken along a line A-A of FIG. 7A. FIG. 8 is a perspective view of the body-side coupling 180.

As illustrated in FIG. 5A, the body drive train 1D includes the drive transmission unit 200, a gear train 300, and the differential mechanism portion 400.

As illustrated in FIGS. 5A, 6A, 6B, and 7B, the drive transmission unit 200 includes the body-side coupling 180, a coupling gear 201, and a transmission shaft 209. In addition, the drive transmission unit 200 includes a bearing member 202, a first engagement member 204, a force transmission member 207, a second engagement member 208, a coupling spring 210, a brake engagement spring 211, and a spring holding member 214.

As illustrated in FIGS. 5A to 5C and 7B, the differential mechanism portion 400 includes the torque limiter 410 including the outer ring 410a and the inner ring 410b. In addition, the differential mechanism portion 400 includes a first differential gear 401, a second differential gear 402, an outer peripheral gear 403, a third differential gear 404, a fourth differential gear 405, a differential shaft 406, an engagement pin 407, and bearings 408 and 409.

As illustrated in FIG. 5A, the gear train 300 includes the branching gear 302, the first drive gear 303, the second drive gear 304, and a load-member gear 305. In addition, the gear train 300 includes one or more unillustrated gears coupling the first drive gear 303 to the coupling gear 201 of the drive transmission unit 200, and one or more unillustrated gears coupling the load-member gear 305 to the fourth differential gear 405 of the differential mechanism portion 400. Further, the gear train 300 may include one or more unillustrated gears coupling the second drive gear 304 to the load-member gear 305. That is, gears connected by two dot chain lines in FIG. 5A may be coupled by one or more gears.

The correspondence between the constituents of the drive transmission unit 200, the differential mechanism portion 400, and the gear train 300 and the motor-side transmission portion 1D2a and the cartridge-side transmission portion 1D2b (FIG. 13A) of the first drive transmission portion 1D1 and the second drive transmission portion 1D2 described above is as follows.

The first drive transmission portion 1D1 in the present embodiment includes part (first drive gear 303) of the gear train 300 and part (coupling gear 201 and body-side coupling 180) of the drive transmission unit 200. The first drive transmission portion 1D1 may include one or more gears coupling the first drive gear 303 and the coupling gear 201.

The motor-side transmission portion 1D2a of the second drive transmission portion 1D2 in the present embodiment includes part (second drive gear 304 and load-member gear 305) of the gear train 300 and part (third differential gear 404, fourth differential gear 405, and differential shaft 406) of the differential mechanism portion 400. The motor-side transmission portion 1D2a of the second drive transmission portion 1D2 may include one or more gears coupling the second drive gear 304 to the load-member gear 305, and one or more gears coupling the load-member gear 305 to the fourth differential gear 405.

The cartridge-side transmission portion 1D2b of the second drive transmission portion 1D2 in the present embodiment includes part (first differential gear 401, second differential gear 402, and outer peripheral gear 403) of the differential mechanism portion 400, part (transmission shaft 209, force transmission member 207, first engagement member 204, and second engagement member 208) of the drive transmission unit 200.

Details of Gear Train

As illustrated in FIG. 5A, the branching gear 302 is connected to the motor 301, and rotates by the driving force of the motor 301. The first drive gear 303 and the second drive gear 304 are each engaged with the branching gear 302. The first drive gear 303 is connected to the coupling gear 201 of the drive transmission unit 200 such that drive can be transmitted. The second drive gear 304 is coupled to the fourth differential gear 405 of the differential mechanism portion 400 via the load-member gear 305 such that drive can be transmitted. The load-member gear 305 is coupled to the load member 306 such that drive can be transmitted.

Details of Drive Transmission Unit

The drive transmission unit 200 is a unit that engages with the drum coupling 63 (FIG. 4) of the cartridge P and transmits force from the apparatus body 1A to the cartridge P. In the present embodiment, the body-side coupling 180, the first engagement member 204, and the second engagement member 208 of the drive transmission unit 200 are each a member capable of engaging with the drum coupling 63 of the cartridge P.

As illustrated in FIG. 6A, the body-side coupling 180, the first engagement member 204, the second engagement member 208, the force transmission member 207, and the transmission shaft 209 are each a rotary member capable of rotating about an axis M1. In the present embodiment, the plurality of members (body-side coupling 180, engagement member (204 and 208)) that are each engaged with the driven portion of the cartridge P and each transmit force to the cartridge P are arranged concentrically.

The axis M1 can be referred to a central axis of the drive transmission unit 200. In a state in which the drive transmission unit 200 is engaged with the drum coupling 63, the drum coupling 63 rotates about the axis M1 (FIG. 4). Meanwhile, the bearing member 202 is fixed to a frame member attached to the apparatus body 1A. To be noted, in the present embodiment, the axis M1 coincides with the rotation axis of the photosensitive drum 61 in a state in which the cartridge P is attached to the apparatus body 1A.

A direction which is parallel to the axis M1 and in which the body-side coupling 180 is positioned with respect to the drum coupling 63 will be referred to as a first axial direction M1A. In addition, a direction which is parallel to the axis M1 and in which the drum coupling 63 is positioned with respect to the body-side coupling 180 will be referred to as a second axial direction M1B. In the case where the first axial direction M1A and the second axial direction M1B are to be not distinguished from each other, these may be simply referred to as axial directions.

As illustrated in FIGS. 6A and 8A to 8C, the body-side coupling 180 includes a flange portion 180a, an engagement protrusion 180b, a cylindrical portion 180c, a force transmission surface 180d, a through hole 180f, and a positioning boss 180i. The body-side coupling 180 is supported by the coupling gear 201 so as to be movable in the first axial direction M1A and the second axial direction M1B.

The cylindrical portion 180c is formed in a cylindrical shape centered on the axis M1. The flange portion 180a extends in a flat shape from an end portion of the cylindrical portion 180c in the first axial direction M1A. The engagement protrusion 180b protrudes to the outer peripheral side further from the outer peripheral portion of the flange portion 180a. The engagement protrusion 180b is a portion that engages with the coupling gear 201. The force transmission surface 180d, the through hole 180f, and the positioning boss 180i will be described later.

The coupling gear 201 is rotatably supported by the bearing member 202. The gear portion (tooth portion) provided on the outer peripheral portion of the coupling gear 201 is engaged with an unillustrated gear coupled to the first drive gear 303.

The coupling gear 201 includes a fitting portion 201c and an engagement surface 201d. The fitting portion 201c is a wall surface portion having an approximate cylindrical shape in which the cylindrical portion 180c of the body-side coupling 180 is inserted. The engagement surface 201d engages with the engagement protrusion 180b of the body-side coupling 180. As a result of the contact between the engagement surface 201d and the engagement protrusion 180b, the coupling gear 201 and the body-side coupling 180 integrally rotate in the normal rotation direction A1. That is, the driving force of the motor 301 is transmitted from the coupling gear 201 to the body-side coupling 180 via the contact between the engagement surface 201d and the engagement protrusion 180b.

Inside the cylindrical portion 180c of the body-side coupling 180, the force transmission member 207, the first engagement member 204, the second engagement member 208, the brake engagement spring 211, the coupling spring 210, and the spring holding member 214 are disposed.

The force transmission member 207 is coupled to the first differential gear 401 of the differential mechanism portion 400 via the transmission shaft 209. The first engagement member 204 and the second engagement member 208 are configured to be engageable with the second force receiving portion 63c of the drum coupling 63 (FIG. 4). The brake engagement spring 211 and the coupling spring 210 are disposed along the axis M1, and generate an urging force in the direction of the axis M1 (axial direction). The spring holding member 214 holds the brake engagement spring 211 and the coupling spring 210.

Each part disposed inside the cylindrical portion 180c of the body-side coupling 180 will be further described.

As illustrated in FIG. 6B, the first engagement member 204 includes a ring portion 204a, coupling engagement portions 204b, recess portions 204c, and protrusion portions 204e. The ring portion 204a is formed in an annular shape centered on the axis M1. The coupling engagement portion 204b is a claw shape protruding in the second axial direction M1B from the ring portion 204a. The coupling engagement portions 204b are portions that engage with the second force receiving portion 63c of the drum coupling 63. The coupling engagement portions 204b of the present embodiment extend spirally in a direction opposite to the normal rotation direction A1 toward the second axial direction M1B. The recess portion 204c is a recess shape that is a portion of an end surface in the second axial direction M1B of the ring portion 204a and that is recessed in the first axial direction M1A. The recess portions 204c are portions that engage with protrusion portions 208c of the second engagement member 208. The protrusion portions 204e protrude from the ring portion 204a in the second axial direction M1B. The protrusion portions 204e are portions that engage with protrusions 207e of the force transmission member 207.

The second engagement member 208 includes a ring portion 208a, coupling engagement portions 208b, and protrusion portions 208c. The ring portion 208a is formed in an annular shape centered on the axis M1. The coupling engagement portion 208b is a claw shape protruding in the second axial direction M1B from the ring portion 208a. The coupling engagement portions 208b are portions that engage with the second force receiving portion 63c of the drum coupling 63. The coupling engagement portions 208b of the present embodiment extend spirally in a direction opposite to the normal rotation direction A1 toward the second axial direction M1B.

As a result of the engagement between the protrusion portions 208c and the recess portions 204c, relative rotation of the second engagement member 208 with respect to the first engagement member 204 is restricted. That is, the first engagement member 204 and the second engagement member 208 integrally rotate about the axis M1.

In addition, the first engagement member 204 is pushed against the second engagement member 208 by the urging force of the brake engagement spring 211, and thus the first engagement member 204 and the second engagement member 208 also integrally move in the axial direction. Therefore, the first engagement member 204 and the second engagement member 208 may be collectively referred as an engagement member (204, 208).

To be noted, the first engagement member 204 can be referred to as an outer engagement member disposed on the outer side in the radial direction, and the second engagement member 208 can be referred to as an inner engagement member disposed on the inner side in the radial direction. The radial direction is a radius direction of a virtual circle centered on the axis M1.

The force transmission member 207 includes a flange portion 207a, a shaft portion 207b, a hole portion 207c, an end surface 207d, protrusions 207e, and a protrusion 207f. The flange portion 207a extends outward in the radial direction from an end portion in the second axial direction M1B of the shaft portion 207b extending in the axial direction. The protrusion 207e is capable of engaging with the protrusion portion 204e of the first engagement member 204.

The force transmission member 207 is disposed such that the flange portion 207a is positioned between the ring portion 204a of the first engagement member 204 and the ring portion 208a of the second engagement member 208 in the axial direction of the flange portion 207a (FIG. 7). The interval between the ring portions 204a and 208a in the axial direction is larger than the thickness of the flange portion 207a, and therefore a gap (backlash, clearance) is set between the ring portions 204a and 208a and the flange portion 207a. As a result of the gap, the force transmission member 207 is relatively movable in the axial direction with respect to the engagement member (204, 208).

Specifically, the engagement member (204, 208) is movable with respect to the force transmission member 207 between an engagement position where the protrusion 207e engages with the protrusion portion 204e of the first engagement member 204 and a separation position where the protrusions 207e are separated from the protrusion portions 204e. When the engagement member (204, 208) is at the engagement position, the force transmission member 207 and the engagement member (204, 208) integrally rotate about the axis M1. When the engagement member (204, 208) is at the separation position, the relative rotation between the force transmission member 207 and the engagement member (204, 208) is allowed.

The hole portion 207c of the force transmission member 207 has a non-circular shape as viewed in the axial direction, and is formed in the shaft portion 207b. An end portion of the transmission shaft 209 is inserted in the hole portion 207c (FIG. 7). As a result of this, the force transmission member 207 and the transmission shaft 209 integrally rotate about the axis M1. In addition, the first differential gear 401 is attached to the transmission shaft 209. Therefore, the first differential gear 401 integrally rotates with the force transmission member 207.

The brake engagement spring 211 is a helical compression spring, and is disposed in a compressed state between the spring holding member 214 and the ring portion 204a of the first engagement member 204 in the axial direction. The brake engagement spring 211 applies a repulsive force (urging force, elastic force) to each of the spring holding member 214 and the ring portion 204a of the first engagement member 204 in the axial direction.

The coupling spring 210 is a helical compression spring, and is disposed in a compressed state between the spring holding member 214 and an end surface 207d in the first axial direction M1A of the force transmission member 207 in the axial direction. The coupling spring 210 applies a repulsive force (urging force, elastic force) to each of the spring holding member 214 and the force transmission member 207.

The spring holding member 214 is a tubular member disposed on the outer peripheral side of the transmission shaft 209. The spring holding member 214 is caused to abut an end surface in the second axial direction M1B of the bearing member 202 by the repulsive force of the two springs (210, 211).

The force transmission member 207 receives a repulsive force in the second axial direction M1B from the brake engagement spring 211 via the ring portion 204a of the first engagement member 204, and also receives a repulsive force in the second axial direction M1B directly from the coupling spring 210. As a result of this force in the second axial direction M1B, the protrusion 207f provided at an end portion in the second axial direction M1B of the force transmission member 207 is caused to abut an abutment surface 180g of the body-side coupling 180 (FIG. 7).

Therefore, the body-side coupling 180 is urged in the second axial direction M1B by the repulsive force of the two springs (210, 211). A restricting member that restricts the movement of the body-side coupling 180 in the second axial direction M1B is provided in the vicinity of the body-side coupling 180 (FIG. 7). The restricting member is disposed to overlap with the flange portion 180a of the body-side coupling 180 as viewed in the axial direction. Drop of the body-side coupling 180 from the coupling gear 201 is restricted by the restricting member. The restricting member may be, for example, a member fixed to the coupling gear 201, or a member fixed to the frame of the apparatus body 1A.

To be noted, when the body-side coupling 180 receives a force in the first axial direction M1A from the outside, the body-side coupling 180 can move in the first axial direction M1A while compressing the two springs (210, 211).

The body-side coupling 180 includes a force transmission surface 180d as illustrated in FIG. 8A. The force transmission surface 180d in the present embodiment is a surface (drive transmission surface) that transmits a force (driving force) acting in the normal rotation direction A1 in a state in which the body-side coupling 180 is engaged with the drum coupling 63.

The body-side coupling 180 of the present embodiment includes two force transmission surfaces 180d disposed at positions 180° from each other in the rotation direction about the axis M1. In addition, the body-side coupling 180 of the present embodiment includes two coupling engagement portions 204b disposed at positions 180° from each other in the rotation direction, and two coupling engagement portions 208b disposed at positions 180° from each other in the rotation direction. That is, the shape of an end surface of the body-side coupling 180 on the drum coupling 63 side (second axial direction M1B side) has rotation symmetry (point symmetry) about the axis M1 as viewed in the axial direction.

In the end surface of the body-side coupling 180 in the second axial direction M1B, the through hole 180f penetrating in the axial direction is provided at a portion other than the force transmission surfaces 180d. As viewed in the axial direction, the coupling engagement portions 204b and 208b of the engagement member (204, 208) are exposed inside the through hole 180f.

FIG. 8B illustrates a state in which the coupling engagement portions 204b and 208b of the first engagement member 204 and the second engagement member 208 are exposed. FIG. 8B illustrates a state in a phase relationship in which the coupling engagement portions 204b and 208b and the force transmission surfaces 180d are close to each other in the normal rotation direction A1 of the drum coupling 63. The size of the through hole 180f is set to be larger than the width of the coupling engagement portions 204b and 208b in the peripheral direction. Therefore, as illustrated in FIG. 8C, the coupling engagement portions 204b and 208b are movable within a certain range in the rotation direction in the body-side coupling 180, and at this time, a gap G1 is generated between the force transmission surfaces 180d and the coupling engagement portions 204b and 208b. The protrusion portion 63p of the drum coupling 63 (FIG. 4) is inserted in the gap G1 when the cartridge P is attached.

Details of Differential Mechanism Portion

As illustrated in FIG. 7B, the torque limiter 410 includes the outer ring 410a and the inner ring 410b. One of the outer ring 410a and the inner ring 410b can be referred to as a first rotary member, and the other of the outer ring 410a and the inner ring 410b can be referred to as a second rotary member. In the present embodiment, the outer ring 410a will be described as an example of a first rotary member, and the inner ring 410b will be described as an example of a second rotary member. The outer ring 410a will be also referred to as a housing that accommodates the inner ring 410b.

The outer ring 410a and the inner ring 410b are rotatable about an axis M2 that is the same rotation axis and are relatively rotatable with respect to each other. The axis M2 is parallel to the axis M1 of the drive transmission unit 200 and passes through a position away from the axis M1. That is, the torque limiter 410 is disposed on the axis M2 that is parallel to the axis M1 of the body-side coupling 180 and that passes through a position away from the axis M1. However, the torque limiter 410 may be disposed coaxially with the body-side coupling 180 on the same axis M1. According to the present embodiment, the space occupied by the body drive train 1D in the axial direction can be reduced by, for example, disposing the drive transmission unit 200 overlaps with part (for example, the differential shaft 406) of the differential mechanism portion 400 as viewed in a direction orthogonal to the axis M1.

The torque limiter 410 is an example of an allowance mechanism that includes a first rotary member and a second rotary member, that is capable of transmitting the driving force of the motor 301 between the first rotary member and the second rotary member, and that is configured to be capable of allowing change in a ratio between a first angular velocity of the first rotary member and a second angular velocity of the second rotary member. The allowance mechanism allows a state in which the ratio between the first angular velocity of the first rotary member and the second angular velocity of the second rotary member is a first ratio and a state in which the ratio is a second ratio different from the first ratio. To be noted, it suffices as long as the allowance mechanism has a configuration or function to allow the change in the ratio between the first angular velocity and the second angular velocity, and does not require the ratio between the first angular velocity and the second angular velocity to fluctuate in, for example, a state in which the drive source (motor 301) is rotating at a constant speed during image formation. In addition, unlike a mechanism in which simply two gears are disposed coaxially and force (torque) is not transmitted between the two gears, the allowance mechanism can transmit force (torque) between the first rotary member and the second rotary member.

In addition, the torque limiter 410 can be referred to as an example of a differential mechanism that includes a first rotary member and a second rotary member and allows relative rotation (differential motion) between the first rotary member and the second rotary member. The differential mechanism allows input of rotations of different angular velocities to the first rotary member and the second rotary member, and absorbs the difference in the angular velocity. In addition, the differential mechanism can transmit force (torque) between the first rotary member and the second rotary member while allowing relative rotation (differential motion) between the first rotary member and the second rotary member.

The torque limiter 410 may be of, for example, a dry friction plate system, or a ball ratchet system. In addition, the torque limiter 410 is merely an example of an allowance mechanism or differential mechanism, and a different allowance mechanism or differential mechanism may be used. For example, the allowance mechanism or the differential mechanism may be a planetary gear mechanism described in a fourth embodiment. In addition, the allowance mechanism or the differential mechanism is not limited to a device that generates a load by friction, and may be a rotary damper that generates a load by viscosity of a fluid such as an oil. The rotary damper includes an inner ring (shaft) and an outer ring (housing), allows relative rotation between the inner ring and the outer ring, and generates a load corresponding to the speed difference between the inner ring and the outer ring by the viscosity of a fluid sealed in a space between the inner ring and the outer ring. As described above, it can be said that the allowance mechanism or the differential mechanism includes a functional portion (absorbing functional portion, allowance functional portion) that absorbs the speed difference and allows change in the speed ratio. For example, it can be said that, in the torque limiter 410, the contact portion between the outer ring 410a and the inner ring 410b corresponds to the functional portion.

As will be described later, in the printer 1 of the present embodiment, when the driven portion of the cartridge P is driven by the motor 301 of the apparatus body 1A, the functional portion operates, and the allowance mechanism or the differential mechanism transmits the torque of the motor 301. That is, when the driven portion of the cartridge P is driven by the motor 301 of the apparatus body 1A, the functional portion absorbs the speed difference and allows the change in the speed ratio, and the torque of the motor 301 is transmitted by the allowance mechanism or the differential mechanism. The time when the driven portion of the cartridge P is driven by the motor 301 of the apparatus body 1A includes the time of the image formation.

As illustrated in FIG. 7B, protrusion portions 410d are provided on the outer ring 410a, and hole portions 403h are provided in the outer peripheral gear 403. As a result of the engagement between the protrusion portions 410d and the hole portions 403h, the outer ring 410a integrally rotates with the outer peripheral gear 403 about the axis M2.

As illustrated in FIGS. 5B, 5C, and 7B, the outer peripheral gear 403 is engaged with the second differential gear 402. The second differential gear 402 is engaged with the first differential gear 401. As described above, the first differential gear 401 is attached to the transmission shaft 209. In addition, when the engagement member (204, 208) is at the engagement position, the transmission shaft 209 integrally rotates with the force transmission member 207 and the engagement member (204, 208). Therefore, the outer ring 410a of the torque limiter 410 is configured to rotate in an interlocked manner with the rotation of the engagement member (204, 208) of the drive transmission unit 200.

As illustrated in FIG. 7B, the inner ring 410b is provided with a groove portion that engages with an engagement pin 407 inserted in the differential shaft 406. As a result of the engagement between the groove portion and the engagement pin 407, the inner ring 410b integrally rotates with the differential shaft 406 about the axis M2. In addition, as a result of the engagement between the groove portion and the engagement pin 407, the torque limiter 410 is positioned in the direction of the axis M2.

The differential shaft 406 is supported by the bearings 408 and 409 fixed to the frame of the apparatus body 1A, and rotates about the axis M2. The third differential gear 404 is attached to the differential shaft 406. The third differential gear 404 is engaged with the fourth differential gear 405. The fourth differential gear 405 is coupled to the coupling gear 201 (FIG. 5A) of the drive transmission unit 200 via the gear train 300. As described above, the coupling gear 201 integrally rotates in the normal rotation direction A1 with the body-side coupling 180. Therefore, the inner ring 410b of the torque limiter 410 is configured to rotate in an interlocked manner with the rotation of the body-side coupling 180 of the drive transmission unit 200.

The outer ring 410a and the inner ring 410b are engaged by friction. In the case where the torque acting between the outer ring 410a and the inner ring 410b is less than a predetermined value, the outer ring 410a and the inner ring 410b rotate integrally. In the case where the torque acting between the outer ring 410a and the inner ring 410b is equal to or more than a predetermined value, relative rotation between the outer ring 410a and the inner ring 410b occurs due to slip on the friction surface. Therefore, the torque limiter 410 allows generation of difference between the angular velocity of the rotation input to the outer ring 410a and the angular velocity of the rotation input to the inner ring 410b.

In addition, the torque limiter 410 generates a load when absorbing the speed difference between the rotations input to the outer ring 410a and the inner ring 410b. That is, in the case where there is a difference in the angular velocity between the outer ring 410a and the inner ring 410b, a torque in a direction to reduce the speed difference acts on each of the outer ring 410a and the inner ring 410b. In the present embodiment, a load is generated by the friction in the relative rotation between the outer ring 410a and the inner ring 410b (first rotary member and second rotary member). The load that the torque limiter 410 generates in the present embodiment acts on the drum coupling 63 as a braking force restricting preceding rotation of the drum coupling 63 with respect to the coupling gear 201. The relationship between the torque limiter 410 and the braking force will be described later. Engagement of Drum Coupling

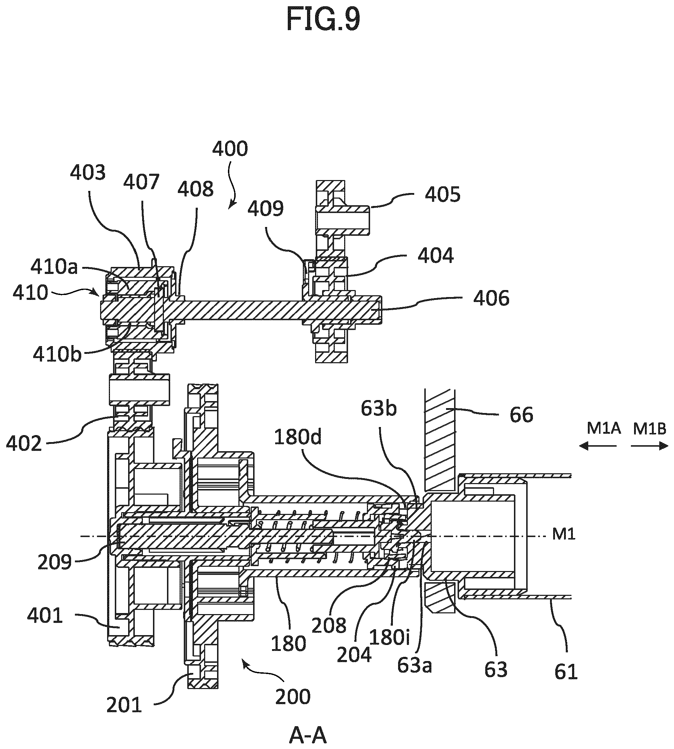

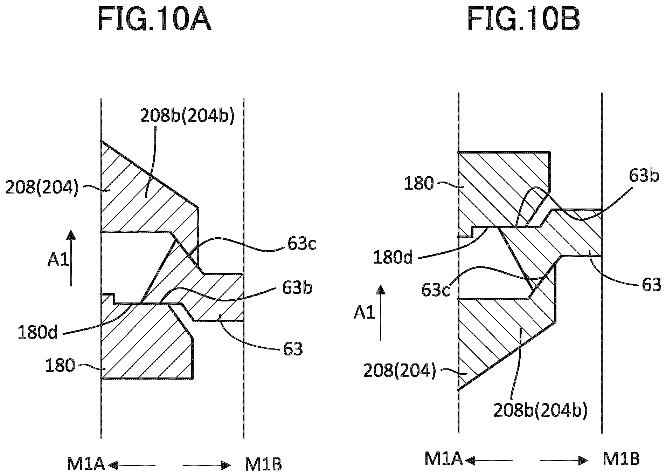

The engagement between the drive transmission unit 200 and the drum coupling 63 in the present embodiment will be described with reference to FIGS. 9 and 10A. FIG. 9 is an offset section view (taken along a line A-A of FIG. 7A) illustrating a state in which the drive transmission unit 200 and the drum coupling 63 are engaged with each other. FIG. 10A is an enlarged view of a cross-section of an engagement portion between the body-side coupling 180 and the second engagement member 208 and the drum coupling 63. To be noted, FIG. 10A illustrates only the second engagement member 208 in the engagement member (204, 208). In a state in which the drive transmission unit 200 and the drum coupling 63 are engaged, the positional relationship between the first engagement member 204 and the drum coupling 63, the transmission direction of the force, and the like are basically the same as those of the second engagement member 208.

When the cartridge P is attached to a predetermined position in the apparatus body 1A, the drive transmission unit 200 and the drum coupling 63 are engaged with each other as illustrated in FIGS. 9 and 10A. In a state in which the drive transmission unit 200 and the drum coupling 63 are engaged, the circular hole portion 63a of the drum coupling 63 and the positioning boss 180i of the body-side coupling 180 are engaged with each other (FIG. 9). As a result of the engagement between the circular hole portion 63a and the positioning boss 180i, the rotation axis of the drum coupling 63 coincides with the axis M1 of the drive transmission unit 200. That is, core adjustment (positioning) of the drum coupling 63 is performed.

In addition, in a state in which the drive transmission unit 200 and the drum coupling 63 are engaged, the force transmission surface 180d of the body-side coupling 180 abuts the first force receiving portion 63b of the drum coupling 63 (FIG. 10A). In addition, in a state in which the drive transmission unit 200 and the drum coupling 63 are engaged, the coupling engagement portion 208b of the second engagement member 208 abuts the second force receiving portion 63c of the drum coupling 63 (FIG. 10A).

The body-side coupling 180 is rotated in the normal rotation direction A1 by drive transmission via the first drive transmission portion 1D1. In a state in which the drive transmission unit 200 and the drum coupling 63 are engaged, the drum coupling 63 is rotated in the normal rotation direction A1 as a result of the first force receiving portion 63b being pressed by the force transmission surface 180d. That is, the force transmission surface 180d functions as a driving force application portion that applies a driving force to the drum coupling 63.

Meanwhile, the second engagement member 208 is coupled to the torque limiter 410 via the cartridge-side transmission portion 1D2b of the second drive transmission portion 1D2, and transmits the load generated by the torque limiter 410 to the drum coupling 63. In a state in which the drive transmission unit 200 and the drum coupling 63 are engaged, the drum coupling 63 receives a braking force in a direction opposite to the normal rotation direction A1 as a result of the second force receiving portion 63c being pressed by the coupling engagement portion 208b.

Therefore, the drum coupling 63 is rotated in the normal rotation direction A1 by the driving force received from the body-side coupling 180 while receiving a braking force from the engagement member (204, 208). According to this configuration, the preceding rotation (fast rotation) of the drum coupling 63 with respect to the body-side coupling 180 can be suppressed as compared with a case where the drum coupling 63 does not receive the braking force. As a result of this, the change in the rotation speed of the drum coupling 63 and the photosensitive drum 61 can be suppressed.

The preceding rotation of the drum coupling 63 refers to a situation in which the drum coupling 63 temporarily rotates at an angular velocity faster than the body-side coupling 180 and the first force receiving portion 63b is separated (floats up) from the force transmission surface 180d. The preceding rotation of the drum coupling 63 can occur in the case where, for example, an external force in the normal rotation direction A1 acts on the photosensitive drum 61. In the case where the preceding rotation of the drum coupling 63 is not restricted, there is a possibility that the operation of the photosensitive drum 61 during the image forming operation becomes unstable, and the image quality deteriorates as a result. In addition, the driving speed of a driving target to which the drive is transmitted via the drum coupling 63 other than the photosensitive drum 61 of the cartridge P can be stabilized.

According to the present embodiment, a braking force is applied to the drum coupling 63 via the engagement member (204, 208), thus the preceding rotation of the drum coupling 63 can be restricted, and the change in the rotation speed of the drum coupling 63 can be suppressed. As a result of this, the driving speed of the driving target of the photosensitive drum 61 and the like in the cartridge P can be stabilized, and for example, deterioration of the image quality caused by the change in the rotation speed of the photosensitive drum 61 can be suppressed.

Operation of Body Drive Train

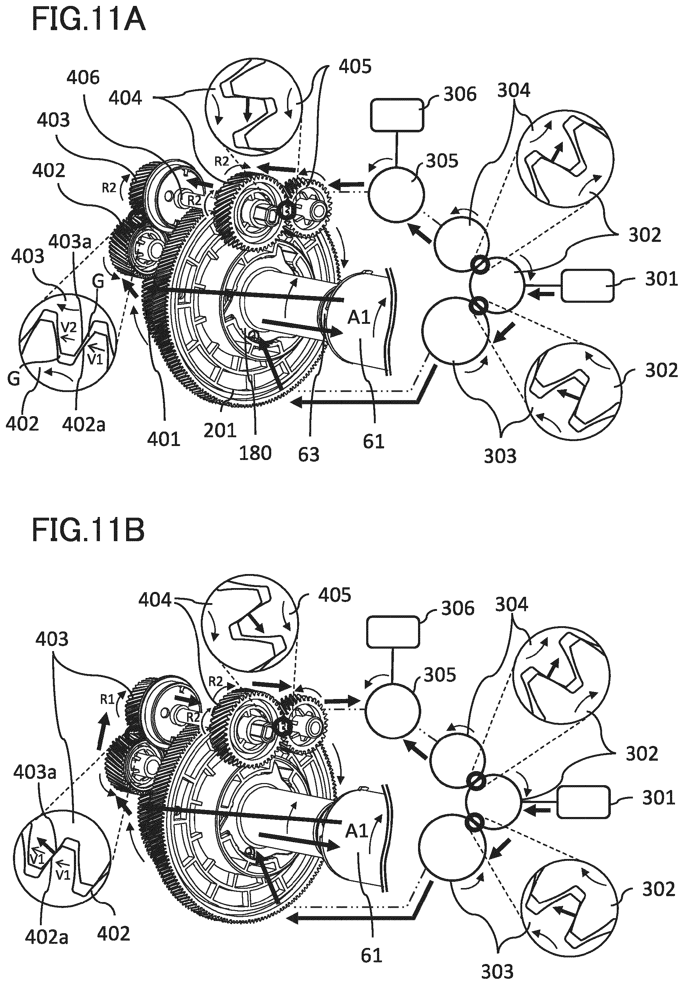

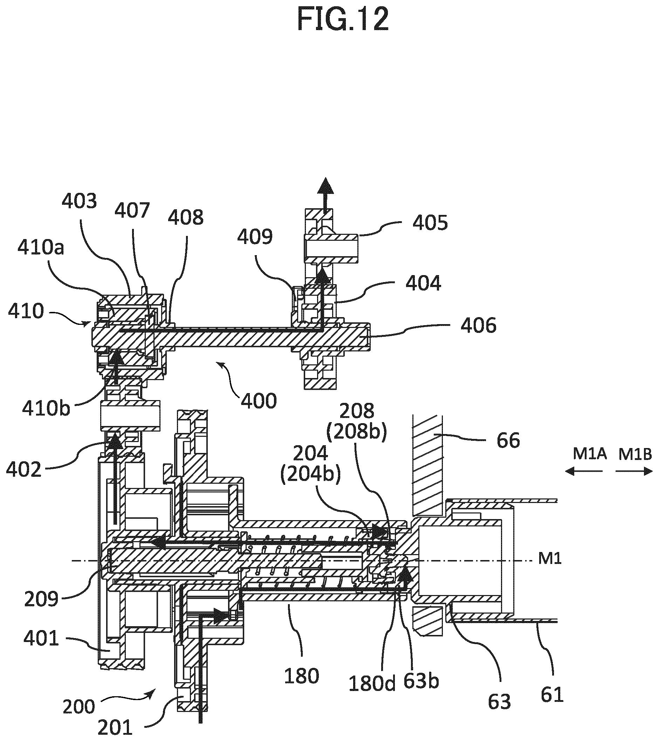

The flow of the operation and torque transmission of the body drive train 1D will be described with reference to FIGS. 11A, 11B, and 12. FIG. 11A is a schematic view of the body drive train 1D in a state in which the transmission path of the driving force is not connected in a closed loop manner. FIG. 11B is a diagram illustrating the body drive train 1D connected in the closed loop manner. FIG. 12 is a diagram illustrating the flow of torque transmission in an offset section view (take along a line A-A of FIG. 7A) of the body drive train 1D connected in the closed loop manner.

The state in which the body drive train 1D is "connected in a closed loop manner" is a state in which, for example, constituents of the first drive transmission portion 1D1 and the second drive transmission portion 1D2 are connected such that force is transmitted in a direction indicated by arrows in FIG. 13A. The coupling between constituents of the body drive train 1D is, for example, contact between tooth surfaces of gears. The body drive train 1D is connected in the closed loop manner when, for example, the drum coupling 63 is constantly rotated by the driving force of the motor 301 during execution of the image forming operation.

As illustrated in FIG. 11A, in the case where there is a gap G between tooth surfaces 402a and 403a of the second differential gear 402 and the outer peripheral gear 403, it can be said that the body drive train 1D of the present embodiment is not connected in the closed loop manner. In the case where there is the gap G, torque is not transmitted from the second differential gear 402 to the outer peripheral gear 403. For example, the state of FIG. 11A is exhibited immediately after the motor 301 is activated.

In the state of FIG. 11A, the driving force is transmitted from the motor 301 to the branching gear 302, the first drive gear 303, the coupling gear 201, the body-side coupling 180, and the drum coupling 63 in this order. Further, the driving force is transmitted from the drum coupling 63 to the engagement member (204, 208), the transmission shaft 209, the first differential gear 401, and the second differential gear 402 in this order. As a result of this, the second differential gear 402 rotates at a peripheral speed V1. The peripheral speed V1 is a speed at which the teeth of the second differential gear 402 move on a pitch circle of the second differential gear 402.

As will be described below, the peripheral speed V1 can be also referred to as a peripheral speed of the second differential gear 402 and the outer peripheral gear 403 in the case where the photosensitive drum 61 is constantly driven at a process speed (peripheral speed of the photosensitive drum 61 during image formation). In addition, the peripheral speed V1 is determined by the angular velocity of the output shaft of the motor 301, a speed transmission ratio of the transmission path from the motor 301 to the second differential gear 402, and the pitch circle radius of the second differential gear 402. This speed transmission ratio is a ratio of a rotational angle of the second differential gear 402 to the rotational angle of the motor 301 in the case where the second differential gear 402 is rotated by the motor 301.

In the state of FIG. 11A, the second differential gear 402 does not receive a load from the torque limiter 410. Therefore, the load of the torque limiter 410 is not transmitted to the engagement member (204, 208) from the second differential gear 402 through the drive transmission path described above in a reverse direction, and thus the braking force derived from the load of the torque limiter 410 is not applied to the drum coupling 63. That is, in the state of FIG. 11A, the preceding rotation of the drum coupling 63 is not restricted.

Meanwhile, in the state of FIG. 11A, the driving force is transmitted from the motor 301 to the branching gear 302, the second drive gear 304, the load-member gear 305, the fourth differential gear 405, the third differential gear 404, the differential shaft 406, the torque limiter 410, and the outer peripheral gear 403 in this order. In addition, in the state of FIG. 11A, since the outer peripheral gear 403 does not receive a load from the second differential gear 402, the slip of the torque limiter 410 does not occur, and the outer peripheral gear 403 and the differential shaft 406 rotate integrally at an angular velocity R2. The angular velocity R2 is determined by the angular velocity of the output shaft of the motor 301, and the speed transmission ratio of the transmission path from the motor 301 to the differential shaft 406. This speed transmission ratio is a ratio of the rotational angle of the differential shaft 406 to the rotational angle of the output shaft of the motor 301 in the case where the differential shaft 406 is rotated by the motor 301.

The peripheral speed of the outer peripheral gear 403 in the case where the outer peripheral gear 403 rotates at the angular velocity R2 equal to the angular velocity of the differential shaft 406 will be denoted by V2. The peripheral speed V2 is a speed at which the teeth of the outer peripheral gear 403 move on the pitch circle of the outer peripheral gear 403. The peripheral speed V2 is expressed by a multiple of the angular velocity R2 by the pitch circle radius of the outer peripheral gear 403.

Here, the peripheral speed V1 of the second differential gear 402 in the state of FIG. 11A is higher than the peripheral speed V2 of the outer peripheral gear 403 (V1 > V2). Therefore, after the motor 301 has taken the state of FIG. 11A immediately after being activated, a tooth of the second differential gear 402 catches up with a tooth of the outer peripheral gear 403.

As a result, as illustrated in FIG. 11B, a tooth surface 402a of the second differential gear 402 comes into contact with a tooth surface 403a of the outer peripheral gear 403. As a result of the contact between the tooth surfaces 402a and 403a, torque is transmitted between the second differential gear 402 and the outer peripheral gear 403. Therefore, in the case where the tooth surfaces 402a and 403a are in contact with each other, it can be said that the body drive train 1D of the present embodiment is connected in the closed loop manner as illustrated in FIG. 13A.

When the tooth of the second differential gear 402 catch up with the tooth of the outer peripheral gear 403 as illustrated in FIG. 11B, the tooth surface 403a of the outer peripheral gear 403 is pressed by the tooth surface 402a of the second differential gear 402, and thus the outer peripheral gear 403 rotates at the peripheral speed V1 equal to the peripheral speed of the second differential gear 402. Meanwhile, the differential shaft 406 continues to rotate at the angular velocity R2. The angular velocity R1 of the outer peripheral gear 403 corresponding to the peripheral speed V1 is higher than the angular velocity R2 of the differential shaft 406 (R1 > R2). That is, the angular velocity R1 of the outer ring 410a that integrally rotates with the outer peripheral gear 403 is higher than the angular velocity R2 of the inner ring 410b that integrally rotates with the differential shaft 406.

As described above, in a state in which the body drive train 1D is connected in the closed loop manner, the different angular velocities R1 and R2 are respectively input to the outer ring 410a and the inner ring 410b of the torque limiter 410, and the slip of the torque limiter 410 (relative rotation between the outer ring 410a and the inner ring 410b) occurs. The torque limiter 410 allows the input of the different angular velocities R1 and R2 to the outer ring 410a and the inner ring 410b, and absorbs the difference in the angular velocity.

That is, the first drive transmission portion 1D1 and the second drive transmission portion 1D2 are configured such that there is a difference between the angular velocities R1 and R2 of the outer ring 410a (first rotary member) and the inner ring 410b (second rotary member) when the driven portion of the cartridge P is driven by the motor 301. In the present embodiment, the angular velocity R1 (first angular velocity) of the outer ring 410a (first rotary member) is higher than the angular velocity R2 (second angular velocity) of the inner ring 410b (second rotary member) when the driven portion of the cartridge P is driven by the motor 301 (drive source).

In addition, when the outer ring 410a and the inner ring 410b relatively rotate, the torque limiter 410 of the present embodiment generates a load to apply the braking force to the drum coupling 63. Specifically, in the state of FIG. 11B, the outer ring 410a is rotated at the angular velocity R1 higher than the angular velocity of the inner ring 410b against the friction between the outer ring 410a and the inner ring 410b. Therefore the outer ring 410a receives a load as a frictional resistance in a direction opposite to the rotation direction thereof. This load is transmitted from the outer peripheral gear 403 integrated with the outer ring 410a to the engagement member (204, 208) via the second differential gear 402, the first differential gear 401, and the transmission shaft 209. Then, a torque (braking force) acting in a direction opposite to the normal rotation direction A1 is transmitted from the engagement member (204, 208) to the second force receiving portion 63c of the drum coupling 63 (FIG. 10A). In other words, at least part of the force that the outer ring 410a (first rotary member) receives from the inner ring 410b (second rotary member) when the outer ring 410a and the inner ring 410b relatively rotate is transmitted to the driven portion of the cartridge P as a braking force (second force) by the cartridge-side transmission portion 1D2b (unit-side transmission portion).

As described above, in a state in which the body drive train 1D is connected in the closed loop manner, the braking force is input to the drum coupling 63 by the load generated by the torque limiter 410. Therefore, the preceding rotation of the drum coupling 63 can be restricted, and the change in the rotation speed of the drum coupling 63 can be suppressed.

Meanwhile, in the state of FIG. 11B, since the inner ring 410b is maintained at the angular velocity R2 lower than the angular velocity of the outer ring 410a against the friction between the inner ring 410b and the outer ring 410a, the inner ring 410b receives a frictional force in the same direction as the rotation direction of the outer ring 410a. It can be said that this frictional force is part of the driving force generated by the motor 301. In addition, as illustrated in FIG. 12, this frictional force is transmitted from the differential shaft 406 integrated with the inner ring 410b to the load-member gear 305 via the third differential gear 404 and the fourth differential gear 405, and is further transmitted from the load-member gear 305 to the load member 306. In addition, as illustrated in FIG. 11B, for example, the engagement surfaces between a tooth of the third differential gear 404 and a tooth of the fourth differential gear 405 are switched. That is, a state in which the fourth differential gear 405 presses the third differential gear 404 (FIG. 11A) transitions to a state in which the third differential gear 404 presses the fourth differential gear 405 (FIG. 11B).

As described above, in a state in which the body drive train 1D is connected in the closed loop manner, a driving force corresponding to the load generated by the torque limiter 410 is transmitted to the load member 306 via the drive transmission path extending from the motor 301 through the torque limiter 410 (see FIG. 12).

In the present embodiment, the load for driving the load member 306 is larger than a driving force that corresponds to the load generated by the torque limiter 410 in the state in which the body drive train 1D is connected in the closed loop manner and that is transmitted to the load member 306 via the torque limiter 410.

Therefore, the rest of driving force required for driving the load member 306 is transmitted to the load member 306 from the motor 301 through a path not including the torque limiter 410 (that is, a path including the branching gear 302, the second drive gear 304, and the load-member gear 305 of FIG. 5A). As described above, the load member 306 in the present embodiment is driven by a sum of the driving force transmitted through a path including the torque limiter 410 and the driving force transmitted through a path not including the torque limiter 410.

Model of Body Drive Train

The flow of torque transmission in the body drive train 1D of the present embodiment will be described with reference to FIGS. 13A to 13C.

FIG. 13A is a model diagram illustrating the body drive train 1D of the present embodiment. FIG. 13B is a model diagram illustrating a body drive train 1D' according to a first reference example. The first reference example of FIG. 13B is different from the present embodiment in that the inner ring 410b of the torque limiter 410 is not connected to the motor-side transmission portion 1D2a of the second drive transmission portion 1D2 and is unrotatably fixed to a frame 1Af of the apparatus body 1A. That is, in this reference example, the differential shaft 406 supporting the inner ring 410b is fixed to the frame 1Af, and the third differential gear 404 and the fourth differential gear 405 are omitted. FIG. 13C is a model diagram illustrating a body drive train 1D" of a second reference example having a configuration in which the torque limiter 410 is further omitted from the first reference example. The other elements of the body drive trains 1D' and 1D" and the cartridge P of the first and second reference examples are the same as in the present embodiment.

Torques ($T_L$, $T_p$, $T_{TL}$, $T_{IF}$, and the like) in the description of FIGS. 13A to 13C are all compared by using values converted into torques about the rotation axis of the motor 301. In addition, in all of FIGS. 13A to 13C, the load required for driving the load member 306 will be denoted by $T_L$, and the load required for driving the cartridge P will be denoted by $T_p$.

First, the second reference example illustrated in FIG. 13C will be described. In the second reference example, the load that the body-side coupling 180 receives from the drum coupling 63 will be referred to as a coupling torque $T_{IF}"$. In the second reference example, the drum coupling 63 is not coupled to the torque limiter 410, and therefore the coupling torque $T_{IF}"$ is equal to the load $T_p$ of the cartridge P.

$$T_{IF}" = T_p$$

In the second reference example, for example, in the case where $T_p$ is relatively small, a situation in which the preceding rotation of the photosensitive drum 61 is caused by application of an external force to the photosensitive drum 61 and the rotation speed of the photosensitive drum 61 becomes unstable is likely to occur. In addition, the total load $T_M{}''$ acting on the motor 301 of the second reference example is the sum of the load $T_p$ of the cartridge P and the load $T_L$ of the load member 306.

$$T_M{}'' = T_p + T_L$$

Next, in the first reference example illustrated in FIG. 13B, since the torque limiter 410 is provided, the slip of the torque limiter 410 occurs when driving the cartridge P. Specifically, whereas the outer ring 410a of the torque limiter 410 rotates at the angular velocity R1 as in the present embodiment, the angular velocity of the inner ring 410b is 0. Therefore, the torque limiter 410 generates a load $T_{TL}$. This load $T_{TL}$ is transmitted from the outer ring 410a via the outer peripheral gear 403, the second differential gear 402, the first differential gear 401, and the transmission shaft 209 similarly to the present embodiment. Then, the braking force corresponding to the load $T_{TL}$ is input from the engagement member (204, 208) to the drum coupling 63 of the cartridge P.

In the first reference example, the body-side coupling 180 rotates the drum coupling 63 while receiving the braking force input to the drum coupling 63 as a load in addition to the original load $T_p$ of the cartridge P. The load the body-side coupling 180 of the first reference example receives from the drum coupling 63 will be referred to as a coupling torque $T_{IF}{}'$. In the case of the first reference example, the coupling torque $T_{IF}{}'$ is equal to the sum of the load $T_p$ of the cartridge P and the load $T_{TL}$ generated by the torque limiter 410.

$$T_{IF}{}' = T_p + T_{TL}$$

As can be seen from the equation above, since the load $T_{TL}$ generated by the torque limiter 410 is added, the coupling torque $T_{IF}{}'$ acting between the body-side coupling 180 and the drum coupling 63 is less likely to be below 0 even if $T_p$ is small. That is, even if an external force is applied to the photosensitive drum 61, the first force receiving portion 63b of the drum coupling 63 is not likely to be separated from the force transmission surface 180d of the body-side coupling 180. Therefore, in the first reference example, as compared with the second reference example, the drum coupling 63 is not likely to rotate faster than the body-side coupling 180, and the preceding rotation of the photosensitive drum 61 is not likely to occur.

Meanwhile, the total load $T_M{}'$ acting on the motor 301 of the first reference example is the sum of the load $T_p$ of the cartridge P, the load $T_L$ of the load member 306, and the load $T_{TL}$ generated by the torque limiter 410

$$T_M{}' = T_p + T_L + T_{TL}$$

As described above, the load $T_M{}'$ acting on the motor 301 of the first reference example is larger than the load $T_M{}''$ acting on the motor 301 of the second reference example ($T_M{}' > T_M{}''$). Therefore, in the first reference example, while a braking force can be applied to the drum coupling 63 by the effect of the torque limiter 410, the load acting on the motor 301 also increases by the load $T_{TL}$ generated by the torque limiter 410.

In contrast, in the body drive train 1D of the present embodiment illustrated in FIG. 13A, the inner ring 410b of the torque limiter 410 is connected to the load member 306 via the motor-side transmission portion 1D2a of the second drive transmission portion 1 D2.

Here, in the load $T_L$ required for driving the load member 306, part transmitted from the motor 301 through the drive transmission path not including the torque limiter 410 will be denoted by $T_L{}'$, and part transmitted from the motor 301 through the drive transmission path including the torque limiter 410 will be denoted by $T_{TL}{}'$.

In a state in which the body drive train 1D is connected in the closed loop manner as in FIG. 11B, the angular velocity R1 of the outer ring 410a is higher than the angular velocity R2 of the inner ring 410b as described above, and the slip of the torque limiter 410 occurs. Then, the load generated by the torque limiter 410 by the relative rotation between the outer ring 410a and the inner ring 410b is transmitted to the load member 306 as a torque (driving force) in a direction to drive the load member 306 via the motor-side transmission portion 1D2a of the second drive transmission portion 1D2. The load $T_{TL}{}'$ transmitted through the drive transmission path including the torque limiter 410 is a load generated by the torque limiter 410 by the relative rotation between the outer ring 410a and the inner ring 410b. That is, at least part of the force that the inner ring 410b (second rotary member) receives from the outer ring 410a (first rotary member) when the outer ring 410a (first rotary member) and the inner ring 410b (second rotary member) relatively rotate is transmitted to the load member via the motor-side transmission portion 1D2a (drive source-side transmission portion). The load $T_{TL}{}'$ can be also referred to as a driving force transmitted from the motor 301 to the load member 306 through a path including the driven portion of the cartridge P and the torque limiter 410.

The driving force ($T_{TL}{}'$) applied from the torque limiter 410 to the load member 306 may be a value smaller than the load ($T_{TL}$) corresponding to the braking force input from the torque limiter 410 to the drum coupling 63 via the cartridge-side transmission portion 1D2b. This is because although the load (frictional force) that the outer ring 410a receives and the load (frictional force) that the inner ring 410b receives about the rotation axis of the torque limiter 410 are torques of the same magnitude in opposite directions, $T_{TL}{}'$ and $T_{TL}$ are values converted into torques about the rotation axis of the motor 301.

Here, the load $T_L$ for driving the load member 306 is larger than the driving force ($T_{TL}'$) applied from the torque limiter 410 to the load member 306.

$$T_{TL}' < T_L$$

Therefore, the load member 306 is driven by both the driving force transmitted from the motor 301 to the load member 306 through the drive transmission path not including the torque limiter 410 and the driving force ($T_{TL}'$) applied to the load member 306 from the torque limiter 410. That is, $T_L$, $T_{TL}'$, and $T_L'$ are in the following relationship.

$$T_L' = T_L - T_{TL}$$

Also in the present embodiment, the slip of the torque limiter 410 occurs when driving the cartridge P. Specifically, whereas the outer ring 410a of the torque limiter 410 rotates at the angular velocity R1, the inner ring 410b rotates at the angular velocity R2 lower than the angular velocity of the outer ring 410a. Therefore, the torque limiter 410 generates the load $T_{TL}$. This load $T_{TL}$ is transmitted from the outer ring 410a via the outer peripheral gear 403, the second differential gear 402, the first differential gear 401, and the transmission shaft 209. Then, the braking force corresponding to the load $T_{TL}$ is input from the engagement member (204, 208) to the drum coupling 63 of the cartridge P.

Also in the present embodiment, similarly to the first reference example, the body-side coupling 180 rotates the drum coupling 63 while receiving the braking force input to the drum coupling 63 as a load in addition to the original load $T_p$ of the cartridge P. The load that the body-side coupling 180 of the present embodiment receives from the drum coupling 63 will be referred to as a coupling torque $T_{IF}$. The coupling torque $T_{IF}$ is a torque acting between the body-side coupling 180 and the drum coupling 63. In the case of the first embodiment, the coupling torque $T_{IF}$ is equal to the sum of the load $T_p$ of the cartridge P and the load $T_{TL}$ generated by the torque limiter 410.

$$T_{IF} = T_p + T_{TL}$$

As can be seen from the equation above, also in the present embodiment, the preceding rotation of the drum coupling 63 with respect to the body-side coupling 180 is made less likely to occur by the load generated by the torque limiter 410 similarly to the reference examples.

Further, the total load $T_M$ acting on the motor 301 in the present embodiment is the sum of the load $T_p$ of the cartridge P, the load $T_{TL}$ generated by the torque limiter 410, and part ($T_L'$) of the load $T_L$ of the load member 306. The part ($T_L'$) of the load $T_L$ of the load member 306 is a load transmitted from the motor 301 through the drive transmission path not including the torque limiter 410 in the load $T_L$ required for driving the load member 306. That is, the load $T_M$ acting on the motor 301 during image formation can be expressed as follows.

$$T_M = T_p + T_{TL} + T_L'$$

As described above, since the relationship of $T_L' = T_L - T_{TL}'$ holds, the above equation can be rewritten as follows.

$$T_M = T_p + T_{TL} + T_L - T_{TL}'$$

$$= T_p + T_L + (T_{TL} - T_{TL}')$$

By comparing the above equation with the equation of the load $T_M'$ acting on the motor 301 of the first reference example, it can be seen that the load $T_M$ acting on the motor 301 of the present embodiment is reduced by an amount corresponding to the driving force ($T_{TL}'$) transmitted to the load member 306 via the torque limiter 410.

Advantages of Present Embodiment

As described above, according to the present embodiment, an image forming apparatus including a new element related to driving of the replaceable unit can be provided.

For example, according to the present embodiment, a driving force in the normal rotation direction A1 and a braking force in a direction opposite thereto can be transmitted to the drum coupling 63 of the cartridge P via the closed loop transmission path. As a result of this, the preceding rotation of the drum coupling 63 and the photosensitive drum 61 can be suppressed, and the cartridge P can be driven at a more stable driving speed. Particularly, in the present embodiment, the above advantage can be obtained by a configuration in which the load generated by the torque limiter 410 (allowance mechanism, differential mechanism) is transmitted to the drum coupling 63 as a braking force in a direction opposite to the normal rotation direction A1.

In addition, according to the present embodiment, the load generated by the torque limiter 410 is used for driving the load member 306, and thus the load acting on the motor 301 can be reduced. Therefore, the lifetime of the motor 301 can be elongated, the amount of heat generated by the motor 301 can be reduced, and the energy-saving property of the motor 301 can be improved. In addition, since, for example, a small or a low-output motor 301 can be used, this configuration is advantageous in miniaturization or cost reduction of the apparatus.

The improvement in the energy-saving property by reducing the load on the motor 301 can be also explained from the viewpoint of the energy consumption (dissipation) by the torque limiter 410. That is, the load generated by the torque limiter 410 (torque value of the torque limiter 410) is the same between the first reference example and the first embodiment. However, in the first reference example, the entirety of the mechanical work (torque value × R1) of rotating the outer ring 410a of the torque limiter 410 at the angular velocity R1 against the frictional resistance between the outer ring 410a and the inner ring 410b dissipates as heat. In contrast, in the first embodiment, since the speed difference (R1 - R2) between the outer ring 410a and the inner ring 410b is smaller than the speed difference in the first reference example, the mechanical work (torque value × (R1 - R2)) of rotating the outer ring 410a against the frictional resistance between the outer ring 410a and the inner ring 410b is smaller than the mechanical work in the first reference example. Therefore, even if the load generated by the torque limiter 410 is the same, the mechanical energy consumed (dissipated) by the torque limiter 410 as heat in the first embodiment is smaller than in the first reference example. As a result, the energy efficiency (ratio of mechanical work to the power consumption of the motor 301) of the body drive train 1D as a whole can be improved, and thus the energy-saving property is improved.

In addition, in the present embodiment, since the speed difference between the outer ring 410a and the inner ring 410b of the torque limiter 410 is smaller than in the first reference example, the wear of the torque limiter 410 can be reduced, and thus the lifetime of the torque limiter 410 can be elongated.

Modification Example

In the present embodiment, a configuration in which the load member 306 is coupled to part (motor-side transmission portion 1D2a of the second drive transmission portion 1D2) of the body drive train 1D has been described. However, the body drive train 1D does not have to be coupled to a load member other than the cartridge P. In addition, a different load member other than the load member 306 may be coupled to other part (for example, the first drive transmission portion 1D1) of the body drive train 1D.

In addition, the force transmission direction in the first drive transmission portion 1D1 and the second drive transmission portion 1D2 can be modified in accordance with the specific configuration of the printer 1 (see also second and third embodiments).

In addition, although a configuration in which a cleaning portion that comes into contact with the photosensitive drum 61 is not provided is used in the present embodiment, the cartridge P may be provided with a cleaning portion. The cleaning portion is, for example, a blade member that rubs the photosensitive drum 61. In the case where the load that the cleaning portion applies to the photosensitive drum 61 is relatively small, there is a possibility that the preceding rotation of the drum coupling 63 occurs. According to the configuration in which the braking force is applied to the drum coupling 63 by the load generated by the torque limiter 410 as in the present embodiment, the preceding rotation of the drum coupling 63 can be suppressed also in the case where the load that the cleaning portion applies to the photosensitive drum 61 is relatively small.

In addition, although the branching gear 302 has been described as an example of an output portion in the present embodiment, it suffices as long as the output portion is configured to constitute part of the closed loop transmission path and be capable of outputting the driving force of the drive source. For example, in the case where the first drive gear 303 and the second drive gear 304 of the present embodiment are each engaged with a pinion gear on the output shaft of the motor 301, this pinion gear functions as the output portion.

In addition, although a case where the load $T_L$ of the load member 306 is larger than the load $T_{TL}$ generated by the torque limiter 410 has been described in the present embodiment, this magnitude relationship between these two may be reversed. That is, the load $T_L$ of the load member 306 may be equal to or less than the load $T_{TL}$ generated by the torque limiter 410 ($T_L \leq T_{TL}$).

Second Embodiment

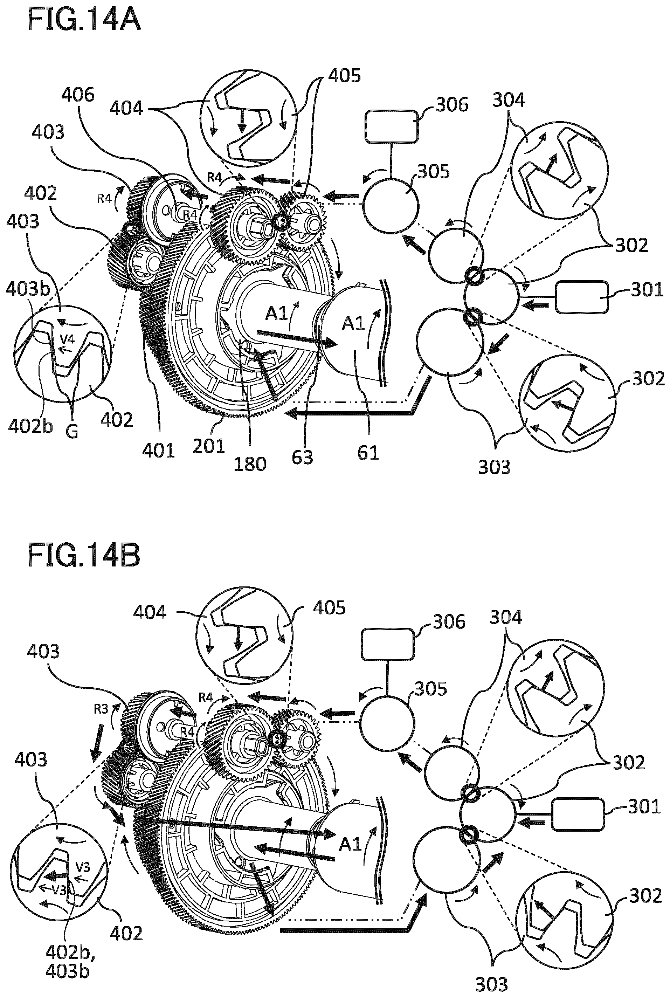

Another embodiment (second embodiment) of the present disclosure will be described with reference to FIGS. 14A to 17D. In the description below, it is assumed that elements denoted by the same reference sign as in the first embodiment basically have the same configurations and functions as those described in the first embodiment unless described otherwise, and part different from the first embodiment will be mainly described.

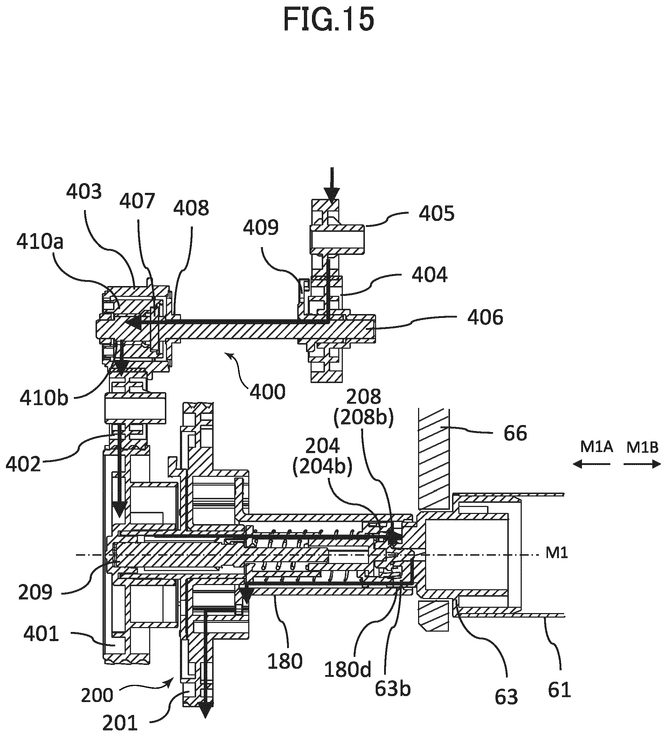

In the first embodiment, an example in which the driving force is transmitted from the coupling gear 201 to the body-side coupling 180, the drum coupling 63, and the first differential gear 401 in this order has been described (FIG. 12). In the present embodiment, an example in which the driving force is transmitted to the first differential gear 401, the drum coupling 63, the body-side coupling 180, and the coupling gear 201 in this order will be described (FIG. 15).

In addition to the fact that the driving force is transmitted in the transmission direction described above, the drive transmission unit 200 and the drum coupling 63 in the present embodiment have a configuration in mirror symmetry with respect to the drive transmission unit 200 and the drum coupling 63 of the first embodiment. That is, the shape of the drive transmission unit 200 in the present embodiment as viewed in the direction of the axis M1 may be the same as a shape obtained by flipping the shape of the drive transmission unit 200 of the first embodiment as viewed in the direction of the axis M1 with respect to the axis M1. In addition, the shape of the drum coupling 63 as viewed in the direction of the axis M1 in the present embodiment may be the same as a shape obtained by flipping the shape of the drum coupling 63 of the first embodiment as viewed in the direction of the axis M1 with respect to the axis M1.

Specifically, the positional relationship between the force transmission surface 180d of the body-side coupling 180, the coupling engagement portion 208b of the second engagement member 208, and the first force receiving portion 63b and the second force receiving portion 63c of the drum coupling 63 in the present embodiment is as illustrated in FIG. 10B. The rotation direction of the drum coupling 63 during image formation will be referred to as a normal rotation direction A1. In this case, the force transmission surface 180d, the first force receiving portion 63b, the second force receiving portion 63c, and the coupling engagement portion 208b are arranged in this order from the upstream side to the downstream side in the normal rotation direction A1 in the first embodiment (FIG. 10A). In contrast, in the present embodiment (FIG. 10B), the coupling engagement portion 208b, the second force receiving portion 63c, the first force receiving portion 63b, and the force transmission surface 180d are arranged in this order from the upstream side to the downstream side in the normal rotation direction A1.

Operation of Body Drive Train

The flow of the operation and torque transmission of the body drive train 1D according to the second embodiment will be described with reference to FIGS. 14A and 14B. FIG. 14A is a schematic view of the body drive train 1D in a state in which the transmission path of the driving force is not connected in a closed loop manner. FIG. 14B is a diagram illustrating the body drive train 1D connected in the closed loop manner. FIG. 15 is a diagram illustrating the flow of torque transmission in an offset section view of the body drive train 1D connected in the closed loop manner.

As illustrated in FIG. 14A, in the case where there is a gap G between tooth surfaces 402b and 403b of the second differential gear 402 and the outer peripheral gear 403, it can be said that the body drive train 1D of the present embodiment is not connected in the closed loop manner. In the case where there is the gap G, torque is not transmitted from the outer peripheral gear 403 to the second differential gear 402. For example, the state of FIG. 14A is exhibited immediately after the motor 301 is activated.

In the state of FIG. 14A, the driving force is transmitted from the motor 301 to the branching gear 302, the first drive gear 303, the coupling gear 201, and the body-side coupling 180 in this order, and the body-side coupling 180 rotates in the normal rotation direction A1. The normal rotation direction A1 is a direction in which the force transmission surface 180d of the body-side coupling 180 moves away from the first force receiving portion 63b of the drum coupling 63 (see FIG. 10B). In addition, as will be described below, the torque is not transmitted from the torque limiter 410 to the drum coupling 63 in the state of FIG. 14A. Therefore, in the state of FIG. 14A that is immediately after the motor 301 is activated, the drum coupling 63 remains still without rotating in the normal rotation direction A1.

Meanwhile, in the state of FIG. 14A, the driving force is transmitted from the motor 301 to the branching gear 302, the second drive gear 304, the load-member gear 305, the fourth differential gear 405, the third differential gear 404, and the differential shaft 406, and the differential shaft 406 rotates at an angular velocity R4. In the state of FIG. 14A, since the outer peripheral gear 403 does not receive a load from the second differential gear 402, the slip of the torque limiter 410 does not occur, and the outer peripheral gear 403 and the differential shaft 406 rotate integrally at the angular velocity R4. The angular velocity R4 is determined by the angular velocity of the output shaft of the motor 301, and the speed transmission ratio of the transmission path from the motor 301 to the differential shaft 406. This speed transmission ratio is a ratio of the rotational angle of the differential shaft 406 to the rotational angle of the output shaft of the motor 301 in the case where the differential shaft 406 is rotated by the motor 301.

The peripheral speed of the outer peripheral gear 403 in the case where the outer peripheral gear 403 rotates at the angular velocity R4 equal to the angular velocity of the differential shaft 406 will be denoted by V4. The peripheral speed V4 is a speed at which the teeth of the outer peripheral gear 403 move on the pitch circle of the outer peripheral gear 403. The peripheral speed V4 is expressed by a multiple of the angular velocity R4 by the pitch circle radius of the outer peripheral gear 403.

In the state of FIG. 14A, while the outer peripheral gear 403 rotates at the peripheral speed V4, the second differential gear 402 remains still without rotating due to the gap G. In addition, the first differential gear 401, the transmission shaft 209, and the engagement member (204, 208) also remain still without rotating. Therefore, the torque in the normal rotation direction A1 is not transmitted from the engagement member (204, 208) to the drum coupling 63. Therefore, the drum coupling 63 remains still without rotating in the normal rotation direction A1.

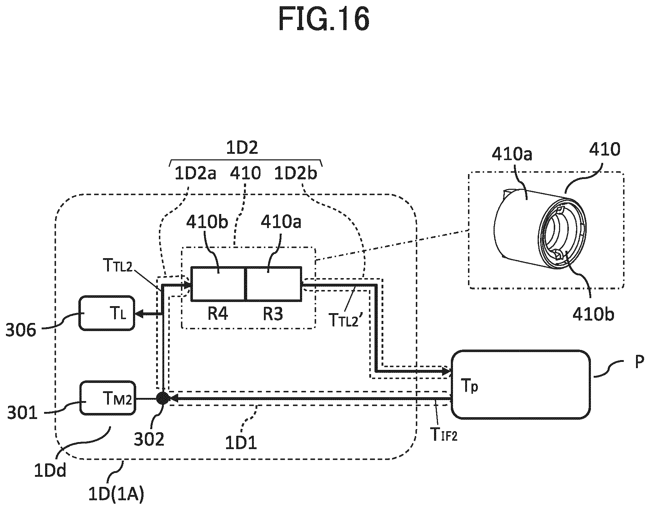

When a very short time elapses in the state of FIG. 14A, the tooth surface 403b of the outer peripheral gear 403 and the tooth surface 402b of the second differential gear 402 come into contact with each other as illustrated in FIG. 14B, and the second differential gear 402 starts rotating at the peripheral speed V4. In the case where the tooth surfaces 402b and 403b are in contact, it can be said that the body drive train 1D of the present embodiment is connected in the closed loop manner as illustrated in FIG. 16.

In accordance with the rotation of the second differential gear 402, the first differential gear 401, the transmission shaft 209, and the engagement member (204, 208) also start rotating. Then, the torque (driving force) in the normal rotation direction A1 is transmitted from the engagement member (204, 208) to the drum coupling 63.

Here, the angular velocity of the engagement member (204, 208) corresponding to the peripheral speed V4 of the second differential gear 402 is higher than the angular velocity of the body-side coupling 180 and the drum coupling 63 in the state of FIG. 14A. However, the body-side coupling 180 is coupled to the first drive gear 303 via the coupling gear 201, and the angular velocity of the first drive gear 303 is restricted by the engagement with the branching gear 302. Even if the second differential gear 402 starts rotating at the peripheral speed V4 and the branching gear 302 starts being pressed by the first drive gear 303, the angular velocity of the branching gear 302 does not change. This is because the force by which the first drive gear 303 presses the branching gear 302 is part of the force output from the branching gear 302 to the second drive gear 304 returning to the branching gear 302 via the closed loop-transmission path. That is, part of the force by which the branching gear 302 presses the second drive gear 304 against the load of the transmission path (including the first drive gear 303) beyond the second drive gear 304 returns from the first drive gear 303 to the branching gear 302. Therefore, the force by which the first drive gear 303 presses the branching gear 302 does not surpass the load for rotating the second drive gear 304, and thus the angular velocity of the branching gear 302 does not increase.

Therefore, after the rotation of the second differential gear 402 is started, the second differential gear 402 temporarily rotates at the peripheral speed V4 equal to the peripheral speed of the outer peripheral gear 403, and then is decelerated to a peripheral speed V3 lower than the peripheral speed V4 (V4 > V3). The peripheral speed V3 is a peripheral speed of the second differential gear 402 in the case where the drum coupling 63 and the engagement member (204, 208) rotate at the same angular velocity as the body-side coupling 180.

As illustrated in FIG. 14B, as a result of the deceleration of the second differential gear 402, the outer peripheral gear 403 is also decelerated from the peripheral speed V4 to the peripheral speed V3. In contrast, the differential shaft 406 continues to rotate at the angular velocity R4 as in the state of FIG. 14A. The angular velocity R3 of the outer peripheral gear 403 corresponding to the peripheral speed V3 is lower than the angular velocity R4 of the differential shaft 406 (R4 > R3). That is, the angular velocity R3 of the outer ring 410a of the torque limiter 410 integrally rotating with the outer peripheral gear 403 is lower than the angular velocity R4 of the inner ring 410b of the torque limiter 410 integrally rotating with the differential shaft 406.

As described above, in a state in which the body drive train 1D is connected in the closed loop manner, the different angular velocities R3 and R4 are respectively input to the outer ring 410a and the inner ring 410b of the torque limiter 410, and the slip of the torque limiter 410 (relative rotation between the outer ring 410a and the inner ring 410b) occurs. That is, also in the present embodiment, the torque limiter 410 serving as an allowance mechanism or a differential mechanism allows the input of the different angular velocities R3 and R4 to the outer ring 410a (first rotary member) and the inner ring 410b (second rotary member), and absorbs the difference in the angular velocity.

That is, the first drive transmission portion 1D1 and the second drive transmission portion 1D2 are configured such that there is a difference between the angular velocities R3 and R4 of the outer ring 410a (first rotary member) and the inner ring 410b (second rotary member) when the driven portion of the cartridge P is driven by the motor 301. In the present embodiment, the angular velocity R3 (first angular velocity) of the outer ring 410a (first rotary member) is higher than the angular velocity R4 (second angular velocity) of the inner ring 410b (second rotary member) when the driven portion of the cartridge P is driven by the motor 301.

In addition, in the state of FIGS. 14B and 15, while the drum coupling 63 receives a force (driving force, third force) in the normal rotation direction A1 from the engagement member (204, 208), the drum coupling 63 also receives a force (braking force, fourth force) in a direction opposite to the normal rotation direction A1 from the body-side coupling 180. That is, the force (braking force, fourth force) that the first force receiving portion 63b receives from the first drive transmission portion 1D1 of the body drive train 1D during image formation acts on the drum coupling 63 in a direction (second rotation direction) opposite to the normal rotation direction A1. The force (driving force, third force) that the second force receiving portion 63c receives from the second drive transmission portion 1D2 of the body drive train 1D during image formation acts on the drum coupling 63 in the normal rotation direction A1 (first rotation direction). That is, the cartridge P (replaceable unit) of the present embodiment includes the second force receiving portion 63c (third surface) that receives the driving force (third force) from the second drive transmission portion 1D2 and the first force receiving portion 63b (fourth surface) that receives the braking force (fourth force) from the first drive transmission portion 1D1.

Therefore, similarly to the first embodiment, the preceding rotation of the drum coupling 63 can be suppressed, and the cartridge P can be driven at a stable driving speed.

Incidentally, in the state of FIGS. 14B and 15, the drum coupling 63 rotates while pressing, in the normal rotation direction A1, the body-side coupling 180 whose speed is limited by the rotation of the branching gear 302. That is, part of the force (driving force) by which the engagement member (204, 208) presses the drum coupling 63 in the normal rotation direction A1 is transmitted from the drum coupling 63 to the body-side coupling 180. The magnitude of this force corresponds to a value obtained by subtracting the load required for driving the cartridge P from the load generated by the torque limiter 410.

In addition, the force transmitted from the drum coupling 63 to the body-side coupling 180 in the state of FIGS. 14B and 15 is transmitted from the body-side coupling 180 to the branching gear 302 via the coupling gear 201 and the first drive gear 303. In other words, part of the braking force (third force) applied to the driven portion of the cartridge P from the second drive transmission portion 1D2 is transmitted from the driven portion to the branching gear 302 (output portion) via the first drive transmission portion 1D1.

The direction of the force (torque) transmitted from the driven portion of the cartridge P to the branching gear 302 (output portion) via the first drive transmission portion 1D1 is the same as the rotation direction of the branching gear 302 in the case where the driven portion of the cartridge P is driven by the driving force of the motor 301 (drive source). That is, the force transmitted from the driven portion of the cartridge P to the branching gear 302 (output portion) via the first drive transmission portion 1D1 can assist the rotation of the branching gear 302 (output portion).

Model of Body Drive Train

The flow of torque transmission in the body drive train 1D of the second embodiment will be described with reference to FIG. 16. FIG. 16 is a model diagram illustrating the body drive train 1D of the present embodiment. Torques used in the description of FIG. 16 are all compared by using values converted into torques acting on the output shaft of the motor 301.

As illustrated in FIG. 16, the torque transmitted from the motor 301 to the inner ring 410b of the torque limiter 410 via the motor-side transmission portion 1D2a of the second drive transmission portion 1D2 will be denoted by $T_{TL2}$. The torque transmitted from the outer ring 410a of the torque limiter 410 to the drum coupling 63 of the cartridge P via the cartridge-side transmission portion 1D2b of the second drive transmission portion 1D2 will be denoted by $T_{TL2}'$.

As described above, since the angular velocity R3 of the outer ring 410a during the image formation is lower than the angular velocity R4 of the inner ring 410b (R4 > R3), slip (relative rotation) between the outer ring 410a and the inner ring 410b occurs during image formation. The torque $T_{TL2}$ corresponds to a torque required for relatively rotating the inner ring 410b with respect to the outer ring 410a against the friction between the outer ring 410a and the inner ring 410b. The torque $T_{TL2}'$ corresponds to a torque applied to the outer ring 410a by the friction between the outer ring 410a and the inner ring 410b. In the present embodiment, in the case where the torque values about the rotation axis of the motor 301 are compared, the torque values are in the relationship of $T_{TL2}' < T_{TL2}$.

Also in the present embodiment, similarly to the first embodiment, the drum coupling 63 receives a torque (driving force, first force) in the normal rotation direction A1 from the body drive train 1D, and also receives a torque (braking force, second force) in a direction opposite to the normal rotation direction A1 from the body drive train 1D. However, unlike in the first embodiment, the drum coupling 63 receives a driving force from the engagement member (204, 208) of the second drive transmission portion 1D2, and receives a braking force from the body-side coupling 180 of the first drive transmission portion 1D1 (see also FIG. 10B).

The force that the body-side coupling 180 of the present embodiment receives from the drum coupling 63 will be referred to as a coupling torque $T_{IF2}$. In addition, the load required for driving the cartridge P will be denoted by $T_p$. As described above, the drum coupling 63 rotates in the normal rotation direction A1 against the load $T_p$ of the cartridge P by the torque $T_{TL2}'$ input from the torque limiter 410 via the cartridge-side transmission portion 1D2b of the second drive transmission portion 1D2. The torque that the body-side coupling 180 receives as a result of the drum coupling 63 pressing the body-side coupling 180 in the normal rotation direction A1 is equal to a value obtained by subtracting the load $T_p$ of the cartridge P from the torque $T_{TL2}'$ input to the drum coupling 63. That is, the value of the coupling torque $T_{IF2}$ in the present embodiment can be expressed by the following equation.

$$T_{IF2} = T_{TL2}' - T_p$$

From the equation described above, it can be seen that if the torque $T_{TL2}'$ transmitted from the torque limiter 410 to the drum coupling 63 is large, the coupling torque $T_{IF2}$ does not become below 0 even if the load $T_p$ of the cartridge P temporarily increases. For example, the torque value of the torque limiter 410 is set in consideration of a range in which the load $T_p$ changes during a normal image forming operation of the printer 1 such that the coupling torque $T_{IF2}$ does not take a negative value for the expected upper limit value of $T_p$. As a result of this, a situation in which the rotation speed of the drum coupling 63 changes such that the rotation of the drum coupling 63 is delayed with respect to the rotation of the body-side coupling 180 can be suppressed even in the case where the load $T_p$ of the cartridge P temporarily increases.

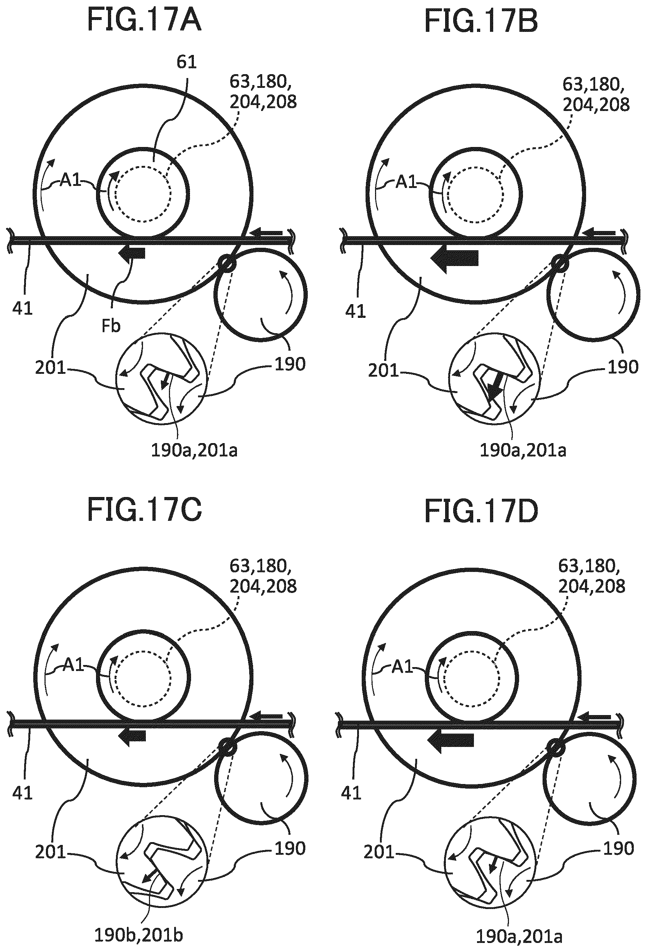

In addition, according to the equation above, it can be seen that, in the case where the load $T_p$ of the cartridge P is temporarily reduced, the coupling torque $T_{IF2}$ increases, and therefore the drum coupling 63 and the body-side coupling 180 are less likely to be separated from each other. This will be described later with reference to FIGS. 17A to 17D.

In the present embodiment, the coupling torque $T_{IF2}$ input from the drum coupling 63 to the body-side coupling 180 is returned to the branching gear 302 via the first drive transmission portion 1D1. The direction in which the coupling torque $T_{IF2}$ acts on the branching gear 302 (rotation direction about the rotation axis of the branching gear 302) is the same as the rotation direction of the branching gear 302 during image formation. Therefore, the coupling torque $T_{IF2}$ returned to the branching gear 302 assists the rotation of the branching gear 302 during image formation.

Specifically, the load required for driving the load member 306 will be denoted by $T_L$. In addition, the sum of loads acting on the motor 301 during image formation will be denoted by $T_{M2}$. The motor 301 rotates the outer ring 410a of the torque limiter 410 against a torque $T_{TL2}$ corresponding to the slip resistance of the torque limiter 410 by driving the load member 306 against the load $T_L$. Meanwhile, the coupling torque $T_{IF2}$ returned to the branching gear 302 via the first drive transmission portion 1D1 is used for rotationally driving the load member 306 and the outer ring 410a of the torque limiter 410. That is, in the present embodiment, the load $T_{M2}$ acting on the motor 301 during image formation can be expressed as follows

$$T_{M2} = T_L + T_{TL2} - T_{IF2}$$

$$= T_L + T_{TL2} - (T_{TL2}' - T_p)$$

$$= T_p + T_L + (T_{TL2} - T_{TL2}')$$

As described as the first reference example (FIG. 13B) of the first embodiment, in a configuration in which the inner ring 410b of the torque limiter 410 is fixed, the load $T_{M2}'$ acting on the motor 301 during image formation is equal to the sum of $T_p$ of the cartridge P, the load $T_L$ of the load member 306, and the torque $T_{TL2}$ corresponding to the slip resistance of the torque limiter 410 ($T_{M2}' = T_p + T_L + T_{TL2}$).

Comparing $T_{M2}$ with $T_{M2}'$, it can be seen that, according to the present embodiment, the load on the motor 301 can be reduced by an amount corresponding to the torque $T_{TL2}'$ transmitted from the torque limiter 410 to the drum coupling 63 via the cartridge-side transmission portion 1D2b of the second drive transmission portion 1D2.

Suppression of Preceding Rotation of Photosensitive Drum

The behavior of the body drive train 1D in the case where an external force in the normal rotation direction A1 is applied to the photosensitive drum 61 of the present embodiment will be described with reference to FIGS. 17A to 17D in comparison with the second reference example (FIG. 13C) described above. FIGS. 17A to 17D illustrate the photosensitive drum 61, the belt 41, and part of body drive train 1D (coupling gear 201 and upstream gear 190) as viewed in the direction of the rotation axis of the photosensitive drum 61. FIG. 17A illustrates how drive is transmitted during normal image formation in the present embodiment. FIG. 17B illustrates a case where the force in the normal rotation direction A1 transmitted from the belt 41 to the photosensitive drum 61 in the present embodiment is increased. FIG. 17C illustrates how drive is transmitted during normal image formation in the second reference example. FIG. 17D illustrates a case where the force in the normal rotation direction A1 transmitted from the belt 41 to the photosensitive drum 61 in the second reference example is increased.

As illustrated in FIG. 17A, a gear that is part of the first drive transmission portion 1D1 and that engages with the coupling gear 201 will be referred to as an upstream gear 190. In the present embodiment, while the drum coupling 63 receives a force (driving force) in the normal rotation direction A1 from the engagement member (204, 208), the drum coupling 63 receives a force (braking force) in a direction opposite to the normal rotation direction A1 from the body-side coupling 180. Therefore, during normal image formation, the body-side coupling 180 rotates by being pressed in the normal rotation direction A1 from the drum coupling 63. In addition, the coupling gear 201 that integrally rotates with the body-side coupling 180 rotates in the normal rotation direction A1 while pressing the upstream gear 190.

That is, in the case of the present embodiment, a tooth surface 201a of a tooth of the coupling gear 201 on the downstream side in the normal rotation direction A1 abuts a tooth surface 190a of a tooth of the upstream gear 190 corresponding to this during normal image formation. That is, when the driven portion of the cartridge P is driven by the motor 301 (drive source), the tooth surface 201a (first tooth surface) of the coupling gear 201 (first gear) abuts the tooth surface 190a (second tooth surface) of the upstream gear 190 (second gear).

In contrast, in the second reference example illustrated in FIG. 17C, the drum coupling 63 receives a force (driving force) in the normal rotation direction A1 from the body-side coupling 180. Therefore, during normal image formation, the coupling gear 201 rotates in the normal rotation direction A1 by being pressed by the upstream gear 190. In addition, the body-side coupling 180 that integrally rotates with the coupling gear 201 rotates in the normal rotation direction A1 while pressing the drum coupling 63.

That is, in the case of the second reference example, the tooth surface 201b of a tooth of the coupling gear 201 on the upstream side in the normal rotation direction A1 abuts a tooth surface 190b of a tooth of the upstream gear 190 corresponding to this during normal image formation.

Here, in the present embodiment and the second reference example, the peripheral speed of the belt 41 during image formation is set to be higher than the peripheral speed of the photosensitive drum 61. Therefore, the photosensitive drum 61 receives a preceding rotational force Fb that is a force in the normal rotation direction A1 from the belt 41.

In the second reference example, the body-side coupling 180 receives a force including the rotational load of the photosensitive drum 61 and the preceding rotational force Fb from the drum coupling 63. In the case where the preceding rotational force Fb is smaller than the rotational load of the photosensitive drum 61, the photosensitive drum 61 and the drum coupling 63 do not rotate at an angular velocity higher than that of the body-side coupling 180, and the photosensitive drum 61 rotates at a stable speed.

However, the value of the preceding rotational force Fb can be changed by, for example, an impact occurring when the leading end of the sheet comes into contact with the belt 41 or when the trailing end of the sheet is released from the belt 41. When the preceding rotational force Fb is temporarily larger than the rotational load of the photosensitive drum 61, the photosensitive drum 61 and the drum coupling 63 rotate (preceding rotation) at an angular velocity higher than that of the body-side coupling 180. Then, as illustrated in FIG. 17D, the engagement surfaces between the coupling gear 201 and the upstream gear 190 are switched from the tooth surfaces 190b and 201b to the tooth surfaces 190a and 201a.

Then, when transitioning from the state of FIG. 17C to the state of FIG. 17D, a state in which neither of the tooth surfaces 201a and 201b of the coupling gear 201 is in contact with the tooth surface 190a or 190b of the upstream gear 190 occurs. That is, in the second reference example, depending on the magnitude of the external force (Fb) in the normal rotation direction A1 applied to the photosensitive drum 61, the rotation of the photosensitive drum 61 can be unstable as a result of the coupling between the upstream gear 190 and the coupling gear 201 being temporarily cut off.

To be noted, according to the first reference example (FIG. 13B), the drum coupling 63 receives a force (braking force) in a direction opposite to the normal rotation direction A1 from the engagement member (204, 208). Therefore, the preceding rotation of the drum coupling 63 is less likely to occur than in the second reference example. However, also in the first reference example, the preceding rotation of the drum coupling 63 can occur in the case where the preceding rotational force Fb applied to the photosensitive drum 61 surpasses the sum of the rotational load of the photosensitive drum 61 and the braking force from the engagement member (204, 208).

In contrast, according to the configuration of the present embodiment illustrated in FIG. 17A, the tooth surface 201a of a tooth of the coupling gear 201 on the downstream side in the normal rotation direction A1 is in contact with the tooth surface 190a of a tooth of the upstream gear 190 even during normal image formation. Therefore, even if the preceding rotational force Fb applied to the photosensitive drum 61 increases temporarily, just the force acting between the tooth surfaces 190a and 201a increases, and the engaged surfaces are not switched from the tooth surfaces 190a and 201a to the tooth surfaces 190b and 201b. Rather, as can be seen from the equation ($T_{IF2} = T_{TL2}' - T_p$) described above, when the load $T_p$ of the cartridge P is reduced by the preceding rotational force Fb, the coupling torque ($T_{IF2}$) acting between the body-side coupling 180 and the drum coupling 63 increases.

In other words, a case where an external force to rotate the drum coupling 63 in the normal rotation direction A1 (first rotation direction) at a speed higher than the driving speed of the drum coupling 63 (rotary member) by the motor 301 (drive source) is applied is assumed. In this case, the first drive transmission portion 1D1 is configured such that the contact between the tooth surface 201a (first tooth surface) of a tooth of the coupling gear 201 (first gear) and the tooth surface 190a (second tooth surface) of a tooth of the upstream gear 190 (second gear) is maintained. In addition, in this case, the first drive transmission portion 1D1 is configured such that the force ($T_{IF2}$) acting between the fourth surface (first force receiving portion 63b) of the cartridge P and the first drive transmission portion 1D1 increases in accordance with the external force.

Therefore, according to the configuration of the present embodiment, even if the preceding rotational force Fb applied to the photosensitive drum 61 temporary increases, the preceding rotation of the photosensitive drum 61 and the drum coupling 63 can be suppressed, and the rotation speed of the photosensitive drum 61 can be stabilized.

To be noted, although description has been given assuming that the peripheral speed of the belt 41 during image formation is set to be higher than the peripheral speed of the photosensitive drum 61, there is also a case where the photosensitive drum 61 receives an external force in the normal rotation direction A1 due to a different cause. For example, in the case of a direct transfer system that directly transfers a toner image onto the sheet S from the photosensitive drum 61 not via the belt 41 (intermediate transfer member), the photosensitive drum 61 can receive the preceding rotational force Fb from the sheet S. Also in such a case, according to the present embodiment, the preceding rotation of the photosensitive drum 61 and the drum coupling 63 can be suppressed, and the rotation speed of the photosensitive drum 61 can be made more stable.

Advantages of Present Embodiment

As described above, according to the present embodiment, an image forming apparatus including a new element related to driving of the replaceable unit can be provided.

For example, according to the present embodiment, a driving force in the normal rotation direction A1 and a braking force in a direction opposite thereto can be transmitted to the drum coupling 63 of the cartridge P via the closed loop transmission path. As a result of this, the preceding rotation of the drum coupling 63 and the photosensitive drum 61 can be suppressed, and the cartridge P can be driven at a more stable driving speed. Particularly, in the present embodiment, the above advantage can be realized by a configuration in which the load generated by the torque limiter 410 (allowance mechanism, differential mechanism) is transmitted to the drum coupling 63 as a force (driving force) in the normal rotation direction A1.

In addition, according to the present embodiment, part of the load generated by the torque limiter 410 is returned to the branching gear 302 (output portion) through the closed loop transmission path, and therefore the load acting on the motor 301 can be reduced. Therefore, the lifetime of the motor 301 can be elongated, the amount of heat generated by the motor 301 can be reduced, and the energy-saving property of the motor 301 can be improved. In addition, since, for example, a small or a low-output motor 301 can be used, this configuration is advantageous in miniaturization or cost reduction of the apparatus.

In addition, according to the present embodiment, as described with reference to FIGS. 17A to 17D, even in the case where the preceding rotational force Fb applied to the photosensitive drum 61 suddenly increases, the change in the rotation speed of the photosensitive drum 61 can be suppressed.

Third Embodiment

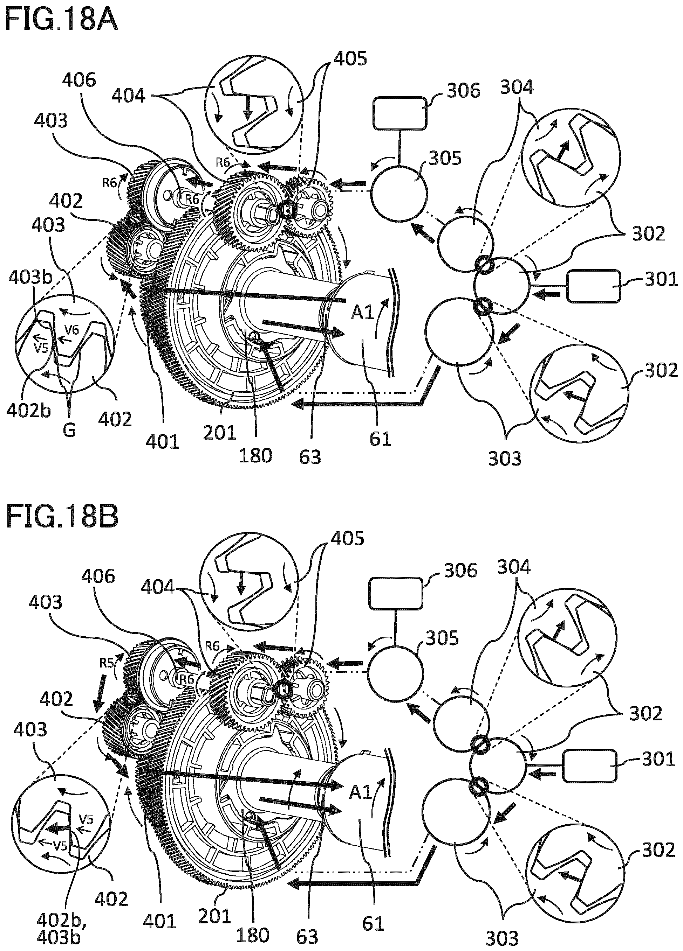

Another embodiment (third embodiment) of the present disclosure will be described with reference to FIGS. 18A to 20. In the description below, it is assumed that elements denoted by the same reference sign as in the first embodiment basically have the same configurations and functions as those described in the first embodiment unless described otherwise, and part different from the first embodiment will be mainly described.

Operation of Body Drive Train

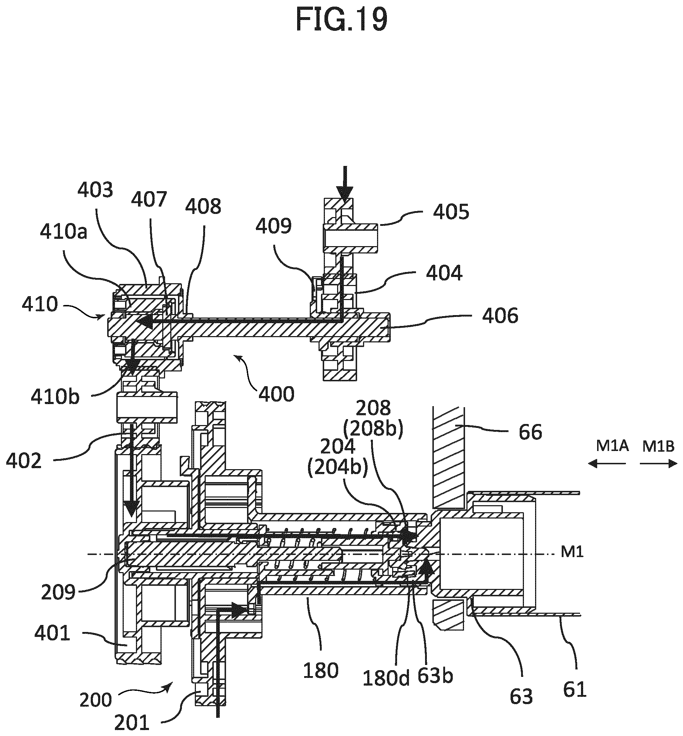

The flow of the operation and torque transmission of the body drive train 1D will be described with reference to FIGS. 18A, 18B, and 19. FIG. 18A is a schematic view of the body drive train 1D in a state in which the transmission path of the driving force is not connected in a closed loop manner. FIG. 18B is a diagram illustrating the body drive train 1D connected in the closed loop manner. FIG. 19 is a diagram illustrating the flow of torque transmission in an offset section view of the body drive train 1D connected in the closed loop manner.

The configuration of the body drive train 1D according to the present embodiment is different from the body drive train 1D according to the first embodiment in the speed settings of the second differential gear 402 and the outer peripheral gear 403 that will be described below. In addition, in the present embodiment, the coupling engagement portions 204b and 208b of the engagement members (204, 208) are configured to be capable of pressing the drum coupling 63 in the normal rotation direction A1. The coupling engagement portion 208b in the present embodiment is configured to be capable of pressing the protrusion portion 63p (FIG. 4) of the drum coupling 63 from the upstream side in the normal rotation direction A1. The other configurations of the body drive train 1D of the present embodiment may be the same as in the first embodiment.

As illustrated in FIG. 18A, in the case where there is a gap G between tooth surfaces 402b and 403b of the second differential gear 402 and the outer peripheral gear 403, it can be said that the body drive train 1D of the present embodiment is not connected in the closed loop manner. In the case where there is the gap G, torque is not transmitted from the second differential gear 402 to the outer peripheral gear 403. For example, the state of FIG. 18A is exhibited immediately after the motor 301 is activated.

In the state of FIG. 18A, the driving force is transmitted from the motor 301 to the branching gear 302, the first drive gear 303, the coupling gear 201, the body-side coupling 180, and the drum coupling 63 in this order. Further, the driving force is transmitted from the drum coupling 63 to the engagement member (204, 208), the transmission shaft 209, the first differential gear 401, and the second differential gear 402 in this order. As a result of this, the second differential gear 402 rotates at a peripheral speed V5. The peripheral speed V5 is a speed at which the teeth of the second differential gear 402 move on a pitch circle of the second differential gear 402. In addition, the peripheral speed V5 is determined by the angular velocity of the output shaft of the motor 301, a speed transmission ratio of the transmission path from the motor 301 to the second differential gear 402, and the pitch circle radius of the second differential gear 402. This speed transmission ratio is a ratio of a rotational angle of the second differential gear 402 to the rotational angle of the motor 301 in the case where the second differential gear 402 is rotated by the motor 301.

Meanwhile, in the state of FIG. 18A, the driving force is transmitted from the motor 301 to the branching gear 302, the second drive gear 304, the load-member gear 305, the fourth differential gear 405, the third differential gear 404, the differential shaft 406, the torque limiter 410, and the outer peripheral gear 403 in this order. In addition, in the state of FIG. 18A, since the outer peripheral gear 403 does not receive a load from the second differential gear 402, the slip of the torque limiter 410 does not occur, and the outer peripheral gear 403 and the differential shaft 406 rotate integrally at an angular velocity R6. The angular velocity R6 is determined by the angular velocity of the output shaft of the motor 301, and the speed transmission ratio of the transmission path from the motor 301 to the differential shaft 406. This speed transmission ratio is a ratio of the rotational angle of the differential shaft 406 to the rotational angle of the output shaft of the motor 301 in the case where the differential shaft 406 is rotated by the motor 301.

The peripheral speed of the outer peripheral gear 403 in the case where the outer peripheral gear 403 rotates at the angular velocity R6 equal to the angular velocity of the differential shaft 406 will be denoted by V6. The peripheral speed V6 is a speed at which the teeth of the outer peripheral gear 403 move on the pitch circle of the outer peripheral gear 403. The peripheral speed V6 is expressed by a multiple of the angular velocity R6 by the pitch circle radius of the outer peripheral gear 403.

Here, the peripheral speed V5 of the second differential gear 402 in the state of FIG. 18A is lower than the peripheral speed V6 of the outer peripheral gear 403 (V5 < V6). That is, unlike in the first embodiment, the movement speed of the teeth of the outer peripheral gear 403 is higher than the movement speed of the teeth of the second differential gear 402. Therefore, after the motor 301 has taken the state of FIG. 18A immediately after being activated, the tooth surfaces 402b and 403b come into contact with each other as a result of the teeth of the second differential gear 402 being caught up by the teeth of the outer peripheral gear 403.

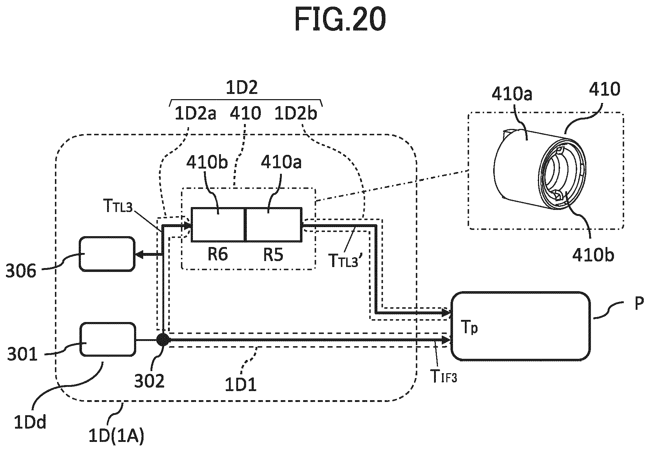

As a result, as illustrated in FIG. 18B, the tooth surface 402b of the second differential gear 402 comes into contact with the tooth surface 403b of the outer peripheral gear 403. As a result of the contact between the tooth surfaces 402b and 403b, torque is transmitted between the second differential gear 402 and the outer peripheral gear 403. Therefore, in the case where the tooth surfaces 402b and 403b are in contact with each other, it can be said that the body drive train 1D of the present embodiment is connected in the closed loop manner as illustrated in FIG. 20.

To be noted, although description above has been given assuming that the second differential gear 402 rotates at the peripheral speed V5 in the state of FIG. 18A, a configuration in which the second differential gear 402 remains still without rotating in the state of FIG. 18A may be employed. That is, in the state of FIG. 18A, torque in the normal rotation direction A1 does not have to be transmitted from the drum coupling 63 to the engagement member (204, 208), and the engagement member (204, 208), the transmission shaft 209, the first differential gear 401, and the second differential gear 402 may remain still. Also in this case, since the peripheral speed V5 (= 0) of the second differential gear 402 in the state of FIG. 18A is lower than the peripheral speed V6 of the outer peripheral gear 403, the tooth surfaces 402b and 403b come into contact with each other as a result of a tooth of the outer peripheral gear 403 catching up with a tooth of the second differential gear 402.

When the teeth of the outer peripheral gear 403 catch up with the teeth of the second differential gear 402 as illustrated in FIG. 18B, the outer peripheral gear 403 rotates at the peripheral speed V5 equal to the peripheral speed of the second differential gear 402 by a reaction force that the tooth surface 403b of the outer peripheral gear 403 receives from the tooth surface 402b of the second differential gear 402. Meanwhile, the differential shaft 406 continues to rotate at the angular velocity R6. The angular velocity R5 of the outer peripheral gear 403 corresponding to the peripheral speed V5 is lower than the angular velocity R6 of the differential shaft 406 (R5 < R6). That is, the angular velocity R5 of the outer ring 410a that integrally rotates with the outer peripheral gear 403 is lower than the angular velocity R6 of the inner ring 410b that integrally rotates with the differential shaft 406.

As described above, in a state in which the body drive train 1D is connected in the closed loop manner, the different angular velocities R5 and R6 are respectively input to the outer ring 410a and the inner ring 410b of the torque limiter 410, and the slip of the torque limiter 410 (relative rotation between the outer ring 410a and the inner ring 410b) occurs. The torque limiter 410 allows the input of the different angular velocities R5 and R6 to the outer ring 410a and the inner ring 410b, and absorbs the difference in the angular velocity.

In the state of FIG. 18B, as illustrated in FIG. 19, torque corresponding to the load generated by the torque limiter 410 is transmitted from the outer peripheral gear 403 to the second differential gear 402, the first differential gear 401, the transmission shaft 209, and the engagement member (204, 208) in this order. Then, the torque corresponding to the load generated by the torque limiter 410 is transmitted from the engagement member (204, 208) to the drum coupling 63.

The torque corresponding to the load generated by the torque limiter 410 and transmitted from the engagement member (204, 208) to the drum coupling 63 is smaller than the load for driving the cartridge P. Therefore, the rest of driving force required for driving the cartridge P is supplied to the drum coupling 63 from the body-side coupling 180. That is, the cartridge P receives a force (driving force) acting on the drum coupling 63 in the normal rotation direction A1 from both the body-side coupling 180 of the first drive transmission portion 1D1 and the engagement member (204, 208) of the second drive transmission portion 1D2.

Model of Body Drive Train

The flow of torque transmission in the body drive train 1D of the third embodiment will be described with reference to FIG. 20. FIG. 20 is a model diagram illustrating the body drive train 1D of the present embodiment. Torques used in the description of FIG. 20 are all compared by using values converted into torques acting on the output shaft of the motor 301.

As illustrated in FIG. 20, the torque transmitted from the motor 301 to the inner ring 410b of the torque limiter 410 via the motor-side transmission portion 1D2a of the second drive transmission portion 1D2 will be denoted by $T_{TL3}$. The torque transmitted from the outer ring 410a of the torque limiter 410 to the drum coupling 63 of the cartridge P via the cartridge-side transmission portion 1D2b of the second drive transmission portion 1D2 will be denoted by $T_{TL3}$'.

As described above, since the angular velocity R5 of the outer ring 410a during image formation is lower than the angular velocity R6 of the inner ring 410b (R5 < R6), slip (relative rotation) between the outer ring 410a and the inner ring 410b occurs during image formation. The torque $T_{TL3}$ corresponds to a torque required for relatively rotating the inner ring 410b with respect to the outer ring 410a against the friction between the outer ring 410a and the inner ring 410b. The torque $T_{TL3}'$ corresponds to a torque applied to the outer ring 410a by the friction between the outer ring 410a and the inner ring 410b. In the present embodiment, in the case where the torque values about the rotation axis of the motor 301 are compared, the torque values are in the relationship of $T_{TL3}' < T_{TL3}$.

In the present embodiment, the drum coupling 63 receives a torque (driving force, first force) in the normal rotation direction A1 from the first drive transmission portion 1D1, and also receives a torque (driving force, second force) in the normal rotation direction A1 from the second drive transmission portion 1D2. In other words, the replaceable unit of the present embodiment receives a force acting in a first rotation direction on the rotary member of the replaceable unit from both the first drive transmission portion 1D1 and the second drive transmission portion 1D2.

The force that the body-side coupling 180 of the present embodiment receives from the drum coupling 63 will be referred to as a coupling torque $T_{IF3}$. In addition, the load required for driving the cartridge P will be denoted by $T_p$. In the present embodiment, the rest of the torque for the load $T_p$ of the cartridge P that is not satisfied by the torque $T_{TL3}'$ transmitted from the torque limiter 410 to the drum coupling 63 is transmitted from the body-side coupling 180 to the drum coupling 63. That is, the coupling torque $T_{IF3}$ can be expressed by the following equation.

$$T_{IF3} = T_p - T_{TL3}'$$

According to the equation described above, since the driving force is transmitted via the second drive transmission portion 1D2 including the torque limiter 410, the load acting on the first drive transmission portion 1D1 can be reduced. That is, in the case of the second reference example (FIG. 13C) not including the second drive transmission portion 1D2, the coupling torque $T_{IF}''$ is equal to the load $T_p$ of the cartridge P ($T_{IF}'' = T_p$), and therefore the load $T_p$ acts on gears and the like included in the first drive transmission portion 1D1. In contrast, the load acting on the gears and the like included in the first drive transmission portion 1D1 of the present embodiment is reduced to $T_{IF3}$.

According to the present embodiment, for example, even in the case where the load $T_p$ of the cartridge P is larger or the load $T_p$ is temporarily increased by an external force, a large load is less likely to act on the gears and the like included in the first drive transmission portion 1D1, and thus deformation is less likely to occur. For example, deformation of teeth of the gears, deformation of the force transmission surface 180d of the body-side coupling 180, and the like are less likely to occur. As a result, change in the speed of the rotation input to the drum coupling 63 via the first drive transmission portion 1D1 caused by deformation of a member can be suppressed.

Advantages of Present Embodiment

As described above, according to the present embodiment, an image forming apparatus including a new element related to driving of the replaceable unit can be provided.

For example, according to the present embodiment, force (driving force) in the normal rotation direction A1 is transmitted to the drum coupling 63 of the cartridge P through a plurality of paths in a closed loop transmission path. Since the loads acting on the members included in the transmission path can be reduced, change in the driving speed caused by deformation of a member can be suppressed.

Fourth Embodiment

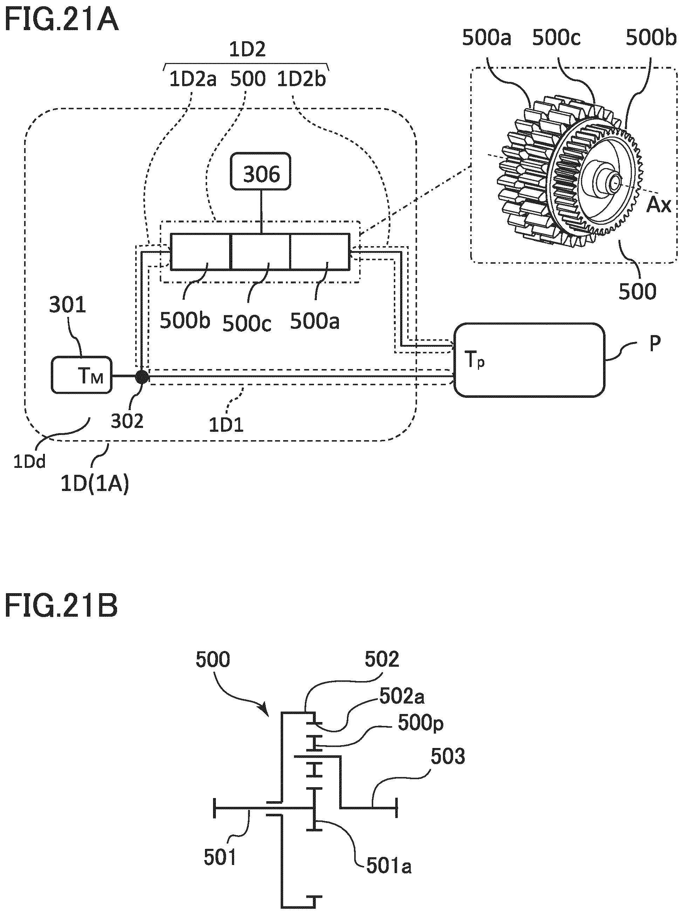

FIG. 21A is a model diagram of a body drive train 1D according to another embodiment (fourth embodiment) according to the present disclosure. FIG. 21B is a schematic view of a planetary gear mechanism 500.

The planetary gear mechanism 500 is an example of an allowance mechanism including a first rotary member and a second rotary member in a closed loop transmission path. The planetary gear mechanism 500 includes a first gear 500a, a second gear 500b, a third gear 500c, and a planetary gear 500p. The first gear 500a, the second gear 500b, and the third gear 500c are each capable of rotating about a revolution axis Ax of the planetary gear mechanism 500 and relatively rotating with respect to each other. The planetary gear 500p is capable of rotating about a rotation axis revolving about the revolution axis Ax of the planetary gear 500p.

As illustrated in FIG. 21B, the planetary gear mechanism 500 includes a sun gear 501, a ring gear 502, and a carrier 503 (planetary carrier). The sun gear 501 includes an outer gear 501a facing radially outward. The ring gear 502 includes an inner gear 502b disposed on the outer peripheral side of the sun gear 501 and facing radially inward. The carrier 503 rotatably supports the planetary gear 500p that engages with the outer gear 501a and the inner gear 502a.

The first gear 500a (first rotary member) of FIG. 21A is one of the sun gear 501, the ring gear 502, and the carrier 503. The second gear 500b (second rotary member) is one of the other two of the sun gear 501, the ring gear 502, and the carrier 503 excluding the first gear 500a. The third gear 500c (third rotary member) is the remaining one of the sun gear 501, the ring gear 502, and the carrier 503 excluding the first gear 500a (first rotary member) and the second gear 500b (second rotary member). It can be said that, in the planetary gear mechanism 500, the first gear 500a, the second gear 500b, the third gear 500c, and the planetary gear 500p correspond to a functional portion of the allowance mechanism or the differential mechanism.

The motor-side transmission portion 1D2a is connected to the first gear 500a of the planetary gear mechanism 500 and to the branching gear 302 (output portion). In addition, the cartridge-side transmission portion 1D2b is connected to the second gear 500b of the planetary gear mechanism 500 and to the drum coupling 63 (driven portion) of the cartridge P.

The first drive transmission portion 1D1 and the second drive transmission portion 1D2 are configured such that the angular velocity of the rotation input to the third gear 500c and the angular velocity input to the first gear 500a are different when driving the drum coupling 63. The planetary gear mechanism 500 allows the sun gear 501, the ring gear 502, and the carrier 503 to relatively rotate with respect to each other by the rotation of the planetary gear 500p. In addition, the planetary gear mechanism 500 is capable of transmitting force (torque) between the first gear 500a and the second gear 500b. That is, the planetary gear mechanism 500 is an example of an allowance mechanism (differential mechanism) capable of transmitting a driving force between the first rotary member and the second rotary member and configured to be capable of allowing change in a ratio between the first angular velocity of the first rotary member and the second angular velocity of the second rotary member.

In addition, in the example of FIG. 21A, the third gear 500c (third rotary member) is coupled to the load member 306. In the planetary gear mechanism 500, when the angular velocities of two rotary members in the three rotary members (sun gear, ring gear, and carrier) that rotate around the revolution axis Ax are given, the angular velocity of the remaining one element is determined. In the present embodiment, the first gear 500a (first rotary member) and the second gear 500b (second rotary member) are coupled to the branching gear 302 (output portion) via a closed loop transmission path. That is, the first gear 500a is coupled to the branching gear 302 (output portion) via the motor-side transmission portion 1D2a. In addition, the second gear 500b is coupled to the branching gear 302 via the cartridge-side transmission portion 1D2b, the driven portion of the cartridge P, and the first drive transmission portion 1D1. Therefore, the angular velocities of the first gear 500a (first rotary member) and the second gear 500b (second rotary member) are determined in accordance with the angular velocity of the branching gear 302 (output portion) when driven by the motor 301, and further the angular velocity of the third gear 500c (third rotary member) is determined.

According to this configuration, the planetary gear mechanism 500 can absorb difference in angular velocities respectively input through the closed loop transmission path, and the driving force of the motor 301 can be transmitted to the load member 306 that is a driving target other than the cartridge P.

In addition, at least part of the load that the third gear 500c receives from the load member 306 when driving the load member 306 is transmitted from the third gear 500c to the second gear 500b in the planetary gear mechanism 500. Further, this load is transmitted from the second gear 500b to the drum coupling 63 as a force (braking force) acting in a direction opposite to the normal rotation direction A1 via the cartridge-side transmission portion 1D2b. That is, at least part of the load of the load member 306 is transmitted to the cartridge P (unit) as a braking force (second force) via the third gear 500c (third rotary member), second gear 500b (second rotary member), and the cartridge-side transmission portion 1D2b (unit-side transmission portion). According to this configuration, similarly to the first and second embodiments, the preceding rotation of the drum coupling 63 and the photosensitive drum 61 can be suppressed, and the cartridge P can be driven at a more stable driving speed.

The planetary gear mechanism 500 can be disposed at a position similar to the torque limiter 410 in the first to third embodiments. For example, the planetary gear mechanism 500 is disposed such that the revolution axis Ax is parallel to the axis M1 of the drive transmission unit 200 and extends through a position away from the axis M1 (see FIGS. 5A, 7A, and 7B). To be noted, the revolution axis Ax of the planetary gear mechanism 500 may be coaxial with the axis M1.

To be noted, the connection relationship between the first gear 500a, the second gear 500b, and the third gear 500c, and the motor-side transmission portion 1D2a and the cartridge-side transmission portion 1D2b of the second drive transmission portion 1D2 and the load member 306 is not limited to that described above. That is, the combination of coupling between the three rotary members (sun gear, ring gear, and carrier) of the planetary gear mechanism 500, the motor-side transmission portion 1D2a, the cartridge-side transmission portion 1D2b, and the load member 306 can be changed.

For example, in addition, the first gear 500a may be connected to the motor-side transmission portion 1D2a, the third gear 500c may be connected to the cartridge-side transmission portion 1D2b, and the second gear 500b may be connected to the load member 306. In addition, the second gear 500b may be connected to the motor-side transmission portion 1D2a, the first gear 500a may be connected to the cartridge-side transmission portion 1D2b, and the third gear 500c may be connected to the load member 306. In addition, the second gear 500b may be connected to the motor-side transmission portion 1D2a, the third gear 500c may be connected to the cartridge-side transmission portion 1D2b, and the first gear 500a may be connected to the load member 306. In addition, the third gear 500c may be connected to the motor-side transmission portion 1D2a, the second gear 500b may be connected to the cartridge-side transmission portion 1D2b, and the first gear 500a may be connected to the load member 306. In addition, the third gear 500c may be connected to the motor-side transmission portion 1D2a, the first gear 500a may be connected to the cartridge-side transmission portion 1D2b, and the second gear 500b may be connected to the load member 306.

Advantages of Present Embodiment

As described above, according to the present embodiment, an image forming apparatus including a new element related to driving of the replaceable unit can be provided.

As described above, the cartridge P is an example of a "unit" that is not necessarily detachable from the apparatus body 1A. That is, according to the present embodiment, an image forming apparatus including a new element related to driving of the unit in the image forming apparatus can be provided.

For example, according to the present embodiment, a driving force in the normal rotation direction A1 and a braking force in a direction opposite thereto can be transmitted to the drum coupling 63 of the cartridge P via the closed loop transmission path. As a result of this, the preceding rotation of the drum coupling 63 and the photosensitive drum 61 can be suppressed, and the cartridge P can be driven at a more stable driving speed. Particularly, in the present embodiment, the above advantage can be realized by a configuration in which part of the load of the load member 306 is transmitted to the drum coupling 63 as a braking force (driving force) via the planetary gear mechanism 500.

Fifth Embodiment

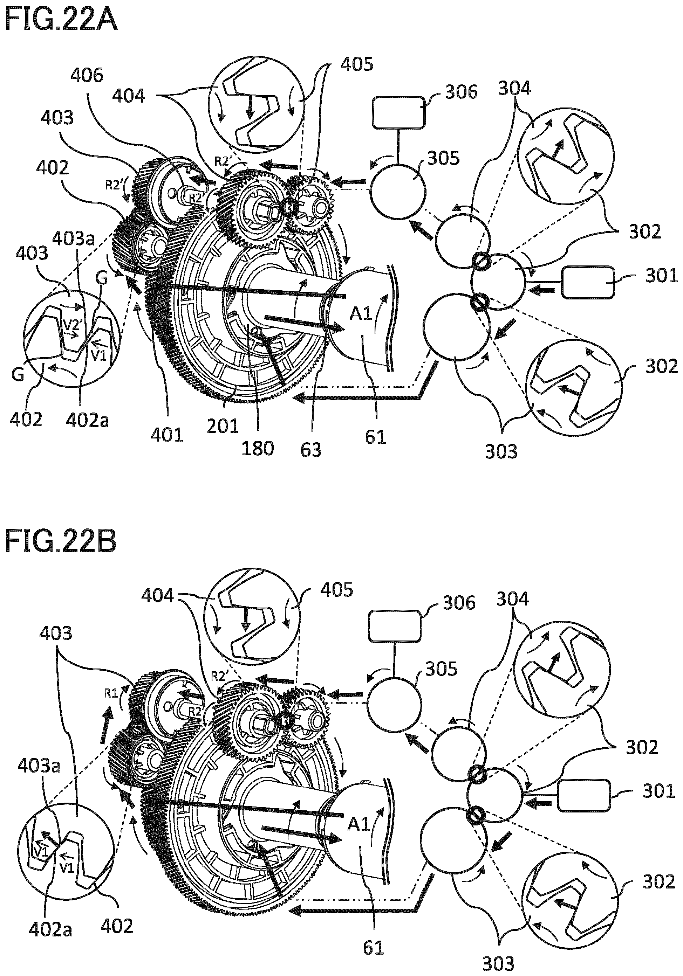

FIGS. 22A and 22B are each a diagram illustrating a body drive train 1D according to yet another embodiment (fifth embodiment). The present embodiment is different from the first embodiment in that the rotation directions of the inner ring 410b of the torque limiter 410, the third differential gear 404, the fourth differential gear 405, and the differential shaft 406 during image formation are opposite to those in the first embodiment (see FIGS. 11A and 11B).

Immediately after the motor 301 is activated, as illustrated in FIG. 22A, the second differential gear 402 rotates at the peripheral speed V1 in a counterclockwise direction in the drawing, and the outer peripheral gear 403 rotates at a peripheral speed V2' in a clockwise direction in the drawing. The outer peripheral gear 403 and the outer ring 410a rotate at the angular velocity R1 integrally with the inner ring 410b and the differential shaft 406. As a result, as illustrated in FIG. 22B, the tooth surface 403a of the outer peripheral gear 403 and the tooth surface 402a of the second differential gear 402 come into contact with each other.

When the tooth surface 403a of the outer peripheral gear 403 and the tooth surface 402a of the second differential gear 402 come into contact with each other, the outer ring 410a of the torque limiter 410 is rotated at the peripheral speed V1 against the friction between the outer ring 410a and the inner ring 410b. At this time, the outer ring 410a rotates at the angular velocity R1 corresponding to the peripheral speed V1 in a direction opposite to the rotation direction of the inner ring 410b.

The load generated by the slip of the torque limiter 410 in the state of FIG. 22B is transmitted via the second differential gear 402, the first differential gear 401, the transmission shaft 209, and the engagement member (204, 208). Then, the load generated by the slip of the torque limiter 410 is transmitted to the drum coupling 63 (driven portion) as a force (braking force) in a direction opposite to the normal rotation direction A1.

As described above, in a state in which the body drive train 1D is connected in the closed loop manner, different angular velocities R1 and R2' are respectively input to the outer ring 410a and the inner ring 410b of the torque limiter 410, and the slip of the torque limiter 410 (relative rotation between the outer ring 410a and the inner ring 410b) occurs. Particularly, in the present embodiment, the rotation directions of the outer ring 410a and the inner ring 410b are opposite to each other. The torque limiter 410 allows input of the different angular velocities R1 and R2' to the outer ring 410a and the inner ring 410b, and absorbs difference in the angular velocity. In addition, the torque limiter 410 of the present embodiment generates a load for applying a braking force to the drum coupling 63 by relative rotation between the outer ring 410a and the inner ring 410b similarly to the first embodiment.

Also according to such a configuration, an advantage similar to that of the first embodiment can be obtained.

Other Modifications

Although driving of the photosensitive drum 61 provided in the cartridge P has been mainly described as an example in each embodiment described above, the application of the technique of the present disclosure is not limited to the photosensitive drum 61 and the cartridge P. The "replaceable unit" is not limited to the cartridge P including the photosensitive drum 61, and may be, for example, the transfer unit 40. The driving target is not limited to the photosensitive drum 61, and may be, for example, the driving roller 46 that rotates the belt 41.

According to the present disclosure, an image forming apparatus including a new element related to driving of a replaceable unit can be provided.

Summary of Present Disclosure

The present disclosure includes at least the following contents.

(Configuration A1)

An image forming apparatus including:

a replaceable unit (P) including a driven portion (61, 63); and
an apparatus body (1A) to which the replaceable unit (P) is detachably attached, the apparatus body (1A) including

(i) a driving unit (1Dd) including a drive source (301) configured to generate a driving force and an output portion (302) configured to output the driving force,
(ii) a first drive transmission portion (1D1) connected to the output portion (302) and to the replaceable unit (P), and
(iii) a second drive transmission portion (1D2) including an allowance mechanism (410, 500) and connected to the output portion (302) and to the replaceable unit (P), the allowance mechanism (410, 500) including a first rotary member (410a, 500a) and a second rotary member (410b, 500b) and configured to transmit the driving force between the first rotary member (410a, 500a) and the second rotary member (410b, 500b) and allow change in a ratio between a first angular velocity of the first rotary member (410a, 500a) and a second angular velocity of the second rotary member (410b, 500b),

wherein a transmission path of the driving force includes a closed loop, which includes the driven portion (61, 63), the output portion (302), the first drive transmission portion (1D1), and the second drive transmission portion (1D2), and
wherein the first drive transmission portion (1D1) and the second drive transmission portion (1D2) are configured such that the first angular velocity is different from the second angular velocity in a case where the driven portion (61, 63) is driven by the drive source (301).

(Configuration A2)

The image forming apparatus according to Configuration A1, wherein the first rotary member (410a, 500a) and the second rotary member (410b, 500b) are configured to rotate about the same rotation axis (M2, Ax).

(Configuration A3)

The image forming apparatus according to Configuration A1, wherein the allowance mechanism (410) is configured to generate a load by friction when the first rotary member (410a) and the second rotary member (410b) relatively rotate.

(Configuration A4)

The image forming apparatus according to any one of Configurations A1 to A3, wherein the allowance mechanism (410) is a torque limiter (410) configured such that the first rotary member (410a) and the second rotary member (410b) relatively rotate in a case where a torque of a predetermined value or more is applied between the first rotary member (410a) and the second rotary member (410b).

(Configuration A5)

The image forming apparatus according to any one of configurations A1 to A3,

wherein the allowance mechanism (500) includes a sun gear (501), a ring gear (502) disposed on an outer peripheral side of the sun gear (501), a planetary gear engaged with the sun gear (501) and the ring gear (502), and a carrier (503) supporting the planetary gear (500p),
wherein the first rotary member (500a) is one of the sun gear (501), the ring gear (502), and the carrier (503), and
wherein the second rotary member (500b) is one of other two of the sun gear (501), the ring gear (502), and the carrier (503) excluding the first rotary member (500a).

(Configuration A6)

The image forming apparatus according to any one of Configurations A1 to A5, further including a load member (306) to which the driving force of the drive source (301) is transmitted via at least part of the closed loop.

(Configuration A7)

An image forming apparatus including:

a replaceable unit (P) including a driven portion (61, 63); and
an apparatus body (1A) to which the replaceable unit (P) is detachably attached, the apparatus body (1A) including

(i) a driving unit (1Dd) including a drive source (301) configured to generate a driving force and an output portion (302) configured to output the driving force,
(ii) a first drive transmission portion (1D1) connected to the output portion (302) and to the replaceable unit (P), and
(iii) a second drive transmission portion (1D2) including a differential mechanism (410, 500) and connected to the output portion (302) and to the replaceable unit (P), the differential mechanism (410, 500) including a first rotary member (410a, 500a) and a second rotary member (410b, 500b) and configured to allow relative rotation of the first rotary member (410a, 500a) and the second rotary member (410b, 500b),

wherein a transmission path of the driving force includes a closed loop, which includes the driven portion (61, 63), the output portion (302), the first drive transmission portion (1D1), and the second drive transmission portion (1D2),
wherein the first drive transmission portion (1D1) and the second drive transmission portion (1D2) are configured such that a first angular velocity of the first rotary member (410a, 500a) is different from a second angular velocity of the second rotary member (410b, 500b) in a case where the driven portion (61, 63) is driven by the drive source (301), and
wherein the first rotary member (410a, 500a) and the second rotary member (410b, 500b) are configured to rotate about the same rotation axis (M2, Ax).

(Configuration A8)

An image forming apparatus including:

a replaceable unit (P) including a driven portion (61, 63); and
an apparatus body (1A) to which the replaceable unit (P) is detachably attached, the apparatus body (1A) including

(i) a driving unit (1Dd) including a drive source (301) configured to generate a driving force and an output portion (302) configured to output the driving force,
(ii) a first drive transmission portion (1D1) connected to the output portion (302) and to the replaceable unit (P), and

a second drive transmission portion (1D2) including a differential mechanism (410, 500) and connected to the output portion (302) and to the replaceable unit (P), the differential mechanism (410, 500) including a first rotary member (410a, 500a) and a second rotary member (410b, 500b) and configured to allow relative rotation of the first rotary member (410a, 500a) and the second rotary member (410b, 500b),

wherein a transmission path of the driving force includes a closed loop, which includes the driven portion (61, 63), the output portion (302), the first drive transmission portion (1D1), and the second drive transmission portion (1D2),
wherein the first drive transmission portion (1D1) and the second drive transmission portion (1D2) are configured such that a first angular velocity of the first rotary member (410a, 500a) is different from a second angular velocity of the second rotary member (410b, 500b) in a case where the driven portion (61, 63) is driven by the drive source (301), and
wherein the differential mechanism (410, 500) is configured to generate a load by friction produced when the first rotary member (410a, 500a) and the second rotary member (410b, 500b) relatively rotate.

(Configuration A9)

The image forming apparatus according to any one of Configurations A1 to A8,

wherein the driven portion (61, 63) includes a rotary member (61) configured to be rotated in a first rotation direction (A1) by the drive source (301), and
wherein the replaceable unit (P) is configured to receive a first force from the first drive transmission portion (1D1) and receive a second force from the second drive transmission portion (1D2), the first force acting on the rotary member (61) in the first rotation direction (A1), the second force acting on the rotary member (61) in a second rotation direction opposite to the first rotation direction (A1).

(Configuration A10)

The image forming apparatus according to Configuration A9,

wherein the second drive transmission portion (1D2) includes (a) a unit-side transmission portion (1D2b) connected to the first rotary member (410a, 500a) and to the driven portion (61, 63) and (b) a drive source-side transmission portion (1D2a) connected to the output portion (302) and to the second rotary member (410b, 500b), and
wherein the unit-side transmission portion (1D2b) is configured to transmit, to the driven portion (61, 63), at least part of a force that the first rotary member (410a, 500a) receives from the second rotary member (410b, 500b) in a case where the first rotary member (410a, 500a) and the second rotary member (410b, 500b) relatively rotate.

(Configuration A11)

The image forming apparatus according to Configuration A10, wherein the first angular velocity is higher than the second angular velocity in the case where the driven portion (61, 63) is driven by the drive source (301).

(Configuration A12)

The image forming apparatus according to Configuration A10 or A11,

a load member (306) connected to the drive source-side transmission portion (1D2a),
wherein the drive source-side transmission portion (1D2a) is configured to transmit, to the load member (306), at least part of a force that the second rotary member (410b, 500b) receives from the first rotary member (410a, 500a) in a case where the first rotary member (410a, 500a) and the second rotary member (410b, 500b) relatively rotate.

(Configuration A13)

The image forming apparatus according to any one of Configurations A1 to A8,

wherein the driven portion (61, 63) includes a rotary member (61) configured to be rotated in a first rotation direction (A1) by the drive source (301), and
wherein the replaceable unit (P) is configured to receive a third force from the second drive transmission portion (1D2) and receive a fourth force from the first drive transmission portion (1D1), the third force acting on the rotary member (61) in the first rotation direction (A1), the fourth force acting on the rotary member (61) in a second rotation direction opposite to the first rotation direction (A1).

(Configuration A14)

The image forming apparatus according to Configuration A13,

wherein the first drive transmission portion (1D1) is configured to transmit part of a force, which is applied to the driven portion (61, 63) from the second drive transmission portion (1D2), from the driven portion (61, 63) to the output portion (302),
wherein the output portion (302) is a gear (302), and
wherein a direction of a force acting on the gear (302) from the force transmitted from the driven portion (61, 63) via the first drive transmission portion (1D1) is the same as a rotation direction of the gear (302) in the case where the driven portion (61, 63) is driven by the drive source (301).

(Configuration A15)

The image forming apparatus according to Configuration A14, wherein the first angular velocity is lower than the second angular velocity in the case where the driven portion (61, 63) is driven by the drive source (301).

(Configuration A16)

The image forming apparatus according to any one of Configurations A13 to A15,

wherein the replaceable unit (P) includes a force receiving portion (63b, 63c) configured to receive a force from the first drive transmission portion (1D1),
wherein the first drive transmission portion (1D1) includes a first gear (201) and a second gear (190) configured to engage with the first gear (201),
wherein in a case where the driven portion (61, 63) is driven by the drive source (301), a first tooth surface (201a) of teeth of the first gear (201) abuts a second tooth surface (190a) of teeth of the second gear (190), and
wherein the first drive transmission portion (1D1) is configured such that, in a case where an external force to rotate the rotary member (61) in the first rotation direction (A1) at a higher speed than a driving speed of the rotary member (61) by the drive source (301) is applied, contact between the first tooth surface (201a) and the second tooth surface (190a) is maintained, and a force acting between the force receiving portion (63b, 63c) of the replaceable unit (P) and the first drive transmission portion (1D1) increases in accordance with the external force.

(Configuration A17)

The image forming apparatus according to any one of Configurations A1 to A8,

wherein the driven portion (61, 63) includes a rotary member (61) configured to be rotated in a first rotation direction (A1) by the drive source (301), and
wherein the replaceable unit (P) is configured to receive a force acting on the rotary member (61) in the first rotation direction (A1) from both the first drive transmission portion (1D1) and the second drive transmission portion (1D2).

(Configuration A18)

The image forming apparatus according to any one of Configurations A1 to A17, wherein the replaceable unit (P) includes a photosensitive drum (61), and the photosensitive drum (61) is rotated by the driving force.

(Configuration B1)

An image forming apparatus including:

a unit (P) including a driven portion (61, 63);
a driving unit (1Dd) including a drive source (301) configured to generate a driving force and an output portion (302) configured to output the driving force;
a first drive transmission portion (1D1) connected to the output portion (302) and to the unit (P); and
a second drive transmission portion (1D2) including a planetary gear mechanism (500) and connected to the output portion (302) and to the unit (P),
wherein a transmission path of the driving force includes a closed loop, which includes the driven portion (61, 63), the output portion (302), the first drive transmission portion (1D1), and the second drive transmission portion (1D2).

(Configuration B2)

The image forming apparatus according to Configuration B1,

wherein the second drive transmission portion (1D2) includes a drive source-side transmission portion (1D2a) connected to the output portion (302) and a unit-side transmission portion (1D2b) connected to the unit (P), and
wherein the first drive transmission portion (1D1), the drive source-side transmission portion (1D2a), and the unit-side transmission portion (1D2b) are configured such that, in a case where the driven portion (61, 63) is rotationally driven by the drive source (301), an angular velocity of rotation input to the planetary gear mechanism (500) via the drive source-side transmission portion (1D2a) about a revolution axis (Ax) of the planetary gear mechanism (500) is different from an angular velocity of rotation input to the planetary gear mechanism (500) via the unit-side transmission portion (1D2b) about the revolution axis (Ax).

(Configuration B3)

The image forming apparatus according to Configuration B2,

wherein the planetary gear mechanism (500) includes a sun gear (501), a ring gear (502) disposed on an outer peripheral side of the sun gear (501), a planetary gear (500p) engaged with the sun gear (501) and the ring gear (502), and a carrier (503) supporting the planetary gear (500p),
wherein one of the sun gear (501), the ring gear (502), and the carrier (503) is a first rotary member (500a) connected to the unit-side transmission portion (1D2b), and

wherein one of other two of the sun gear (501), the ring gear (502), and the carrier (503) excluding the first rotary member (500a) is a second rotary member (500b) connected to the drive source-side transmission portion (1D2a).

(Configuration B4)

The image forming apparatus according to Configuration B3,

wherein one of the sun gear (501), the ring gear (502), and the carrier (503) excluding the first rotary member (500a) and the second rotary member (500b) is a third rotary member (500c), and
wherein the image forming apparatus further includes a load member (306) to which the driving force of the drive source (301) is transmitted via the third rotary member (500c).

(Configuration B5)

The image forming apparatus according to Configuration B4, wherein the load member (306) is a conveyance roller configured to convey a recording material.

(Configuration B6)

The image forming apparatus according to Configuration B5,

wherein the driven portion includes a rotary member (61) rotated in a first rotation direction (A1) by the drive source (301), and
wherein the unit (P) is configured to receive a first force from the first drive transmission portion (1D1) and receive a second force from the second drive transmission portion (1D2), the first force acting on the rotary member (61) in the first rotation direction (A1), the second force acting on the rotary member (61) in a second rotation direction opposite to the first rotation direction (A1).

(Configuration B7)

The image forming apparatus according to Configuration B6, wherein at least part of a load of the load member (306) is transmitted to the unit (P) as the second force via the third rotary member (500c), the first rotary member (500a), and the unit-side transmission portion (1D2b).

(Configuration B8)

The image forming apparatus according to Configuration B6 or B7, wherein the unit (P) includes a first surface (63b) configured to receive the first force from the first drive transmission portion (1D1), and a second surface (63c) configured to receive the second force from the second drive transmission portion (1D2).

(Configuration B9)

The image forming apparatus according to any one of Configurations B1 to B8, wherein the unit (P) includes a photosensitive drum (61) configured to be rotated by the driving force.

Other Embodiments

Various embodiments have been described in detail above but it will be understood that the present disclosure is not limited to these embodiments and encompasses all modifications, variants, alternatives and equivalents falling within the scope of the appended claims.

**Claims**

1. An image forming apparatus comprising:

   a replaceable unit (P) including a driven portion (61, 63); and
   an apparatus body (1A) to which the replaceable unit (P) is detachably attached, the apparatus body (1A) including

   (i) a driving unit (1Dd) including a drive source (301) configured to generate a driving force and an output portion (302) configured to output the driving force,
   (ii) a first drive transmission portion (1D1) connected to the output portion (302) and to the replaceable unit (P), and
   (iii) a second drive transmission portion (1D2) including an allowance mechanism (410, 500) and connected to the output portion (302) and to the replaceable unit (P), the allowance mechanism (410, 500) including a first rotary member (410a, 500a) and a second rotary member (410b, 500b) and configured to transmit the driving force between the first rotary member (410a, 500a) and the second rotary member (410b, 500b) and allow change in a ratio between a first angular velocity of the first rotary member (410a, 500a) and a second angular velocity of the second rotary member (410b, 500b),

   wherein a transmission path of the driving force includes a closed loop, which includes the driven portion (61, 63), the output portion (302), the first drive transmission portion (1D1), and the second drive transmission portion (1D2), and

   wherein the first drive transmission portion (1D1) and the second drive transmission portion (1D2) are configured such that the first angular velocity is different from the second angular velocity in a case where the driven portion (61, 63) is driven by the drive source (301).

2. The image forming apparatus according to claim 1, wherein the first rotary member (410a, 500a) and the second rotary member (410b, 500b) are configured to rotate about the same rotation axis (M2, Ax).

3. The image forming apparatus according to claim 1 or 2,

   wherein the allowance mechanism (500) includes a sun gear (501), a ring gear (502) disposed on an outer peripheral side of the sun gear (501), a planetary gear (500p) engaged with the sun gear (501) and the ring gear (502), and a carrier (503) supporting the planetary gear (500p),
   wherein the first rotary member (500a) is one of the sun gear (501), the ring gear (502), and the carrier (503), and
   wherein the second rotary member (500b) is one of other two of the sun gear (501), the ring gear (502), and the carrier (503) excluding the first rotary member (500a).

4. The image forming apparatus according to claim 1 or 2,

   wherein the driven portion (61, 63) includes a rotary member (61) configured to be rotated in a first rotation direction (A1) by the drive source (301), and
   wherein the replaceable unit (P) is configured to receive a first force from the first drive transmission portion (1D1) and receive a second force from the second drive transmission portion (1D2), the first force acting on the rotary member (61) in the first rotation direction (A1), the second force acting on the rotary member (61) in a second rotation direction opposite to the first rotation direction (A1).

5. The image forming apparatus according to claim 4,

   wherein the second drive transmission portion (1D2) includes (a) a unit-side transmission portion (1D2b) connected to the first rotary member (410a, 500a) and to the driven portion (61, 63) and (b) a drive source-side transmission portion (1D2a) connected to the output portion (302) and to the second rotary member (410b, 500b), and
   wherein the unit-side transmission portion (1D2b) is configured to transmit, to the driven portion (61, 63), at least part of a force that the first rotary member (410a, 500a) receives from the second rotary member (410b, 500b) in a case where the first rotary member (410a, 500a) and the second rotary member (410b, 500b) relatively rotate.

6. The image forming apparatus according to claim 5, further comprising:

a load member (306) connected to the drive source-side transmission portion (1D2a), wherein the drive source-side transmission portion (1D2a) is configured to transmit, to the load member (306), at least part of a force that the second rotary member (410b, 500b) receives from the first rotary member (410a, 500a) in a case where the first rotary member (410a, 500a) and the second rotary member (410b, 500b) relatively rotate.

7. The image forming apparatus according to claim 1 or 2,

wherein the driven portion (61, 63) includes a rotary member (61) configured to be rotated in a first rotation direction (A1) by the drive source (301), and wherein the replaceable unit (P) is configured to receive a third force from the second drive transmission portion (1D2) and receive a fourth force from the first drive transmission portion (1D1), the third force acting on the rotary member (61) in the first rotation direction (A1), the fourth force acting on the rotary member (61) in a second rotation direction opposite to the first rotation direction (A1).

8. The image forming apparatus according to claim 7,

wherein the first drive transmission portion (1D1) is configured to transmit part of a force, which is applied to the driven portion (61, 63) from the second drive transmission portion (1D2), from the driven portion (61, 63) to the output portion (302), wherein the output portion (302) is a gear (302), and wherein a direction of a force acting on the gear (302) from the force transmitted from the driven portion (61, 63) via the first drive transmission portion (1D1) is the same as a rotation direction of the gear (302) in the case where the driven portion (61, 63) is driven by the drive source (301).

9. The image forming apparatus according to claim 1 or 2,

wherein the driven portion (61, 63) includes a rotary member (61) configured to be rotated in a first rotation direction (A1) by the drive source (301), and wherein the replaceable unit (P) is configured to receive a force acting on the rotary member (61) in the first rotation direction (A1) from both the first drive transmission portion (1D1) and the second drive transmission portion (1D2).

10. An image forming apparatus comprising:

a unit (P) including a driven portion (61, 63); a driving unit (1Dd) including a drive source (301) configured to generate a driving force and an output portion (302) configured to output the driving force; a first drive transmission portion (1D1) connected to the output portion (302) and to the unit (P); and a second drive transmission portion (1D2) including a planetary gear mechanism (500) and connected to the output portion (302) and to the unit (P), wherein a transmission path of the driving force includes a closed loop, which includes the driven portion (61, 63), the output portion (302), the first drive transmission portion (1D1), and the second drive transmission portion (1D2).

11. The image forming apparatus according to claim 10,

wherein the second drive transmission portion (1D2) includes a drive source-side transmission portion (1D2a) connected to the output portion (302) and a unit-side transmission portion (1D2b) connected to the unit (P), and wherein the first drive transmission portion (1D1), the drive source-side transmission portion (1D2a), and the unit-side transmission portion (1D2b) are configured such that, in a case where the driven portion (61, 63) is rotationally driven by the drive source (301), an angular velocity of rotation input to the planetary gear mechanism (500) via the drive source-side transmission portion (1D2a) about a revolution axis (Ax) of the planetary gear mechanism (500) is different from an angular velocity of rotation input to the planetary gear mechanism (500) via the unit-side transmission portion (1D2b) about the revolution axis (Ax).

12. The image forming apparatus according to claim 11,

wherein the planetary gear mechanism (500) includes a sun gear (501), a ring gear (502) disposed on an outer peripheral side of the sun gear (501), a planetary gear (500p) engaged with the sun gear (501) and the ring gear (502), and a carrier (503) supporting the planetary gear (500p),

wherein one of the sun gear (501), the ring gear (502), and the carrier (503) is a first rotary member (500a) connected to the unit-side transmission portion (1D2b), and

wherein one of other two of the sun gear (501), the ring gear (502), and the carrier (503) excluding the first rotary member (500a) is a second rotary member (500b) connected to the drive source-side transmission portion (1D2a).

13. The image forming apparatus according to claim 12,

wherein one of the sun gear (501), the ring gear (502), and the carrier (503) excluding the first rotary member (500a) and the second rotary member (500b) is a third rotary member (500c), and

wherein the image forming apparatus further comprises a load member (306) to which the driving force of the drive source (301) is transmitted via the third rotary member (500c).

14. The image forming apparatus according to claim 13,

wherein the driven portion (61, 63) includes a rotary member (61) rotated in a first rotation direction (A1) by the drive source (301), and

wherein the unit (P) is configured to receive a first force from the first drive transmission portion (1D1) and receive a second force from the second drive transmission portion (1D2), the first force acting on the rotary member (61) in the first rotation direction (A1), the second force acting on the rotary member (61) in a second rotation direction opposite to the first rotation direction (A1).

15. The image forming apparatus according to claim 14, wherein at least part of a load of the load member (306) is transmitted to the unit (P) as the second force via the third rotary member (500c), the first rotary member (410a, 500a), and the unit-side transmission portion (1D2b).

FIG.1

FIG.2

# FIG.3

# FIG.4

# FIG.5A

# FIG.5B

# FIG.5C

# FIG.6A

# FIG.6B

# FIG.7A

# FIG.7B

A-A

FIG.8A

180

180d
180i
180f
A1
M1
180f 180d

FIG.8B

180

180d 204b
A
208b
208b
204b 180d

FIG.8C

180
G1
180d
204b
A
208b
208b
204b 180d
G1

# FIG.9

A-A

# FIG.10A

208b(204b)

208(204)

A1

63c

63b

180d

63

180

M1A ← → M1B

# FIG.10B

180

63b

180d

63c

63

A1

208(204)

208b(204b)

M1A ← → M1B

# FIG.11A

# FIG.11B

# FIG.12

**FIG.13A**

**FIG.13B**

**FIG.13C**

# FIG.14A

# FIG.14B

# FIG.15

# FIG.16

## FIG.17A

61

63,180,
204,208

A1

41

Fb

201

190

190a,201a

## FIG.17B

63,180,
204,208

A1

41

201

190

190a,201a

## FIG.17C

63,180,
204,208

A1

41

201

190

190b,201b

## FIG.17D

63,180,
204,208

A1

41

201

190

190a,201a

EP 4 703 805 A1

## FIG.18A

## FIG.18B

# FIG.19

# FIG.20

## FIG.21A

## FIG.21B

# FIG.22A

# FIG.22B

Europäisches
Patentamt
European
Patent Office
Office européen
des brevets

**EUROPEAN SEARCH REPORT**

Application Number

EP 25 19 7827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 431 188 A1 (RICOH CO LTD [JP]) 21 March 2012 (2012-03-21) | 1,2,4-9 | INV. G03G15/00 G03G21/18 |
| Y | * figure 2 * <br> * paragraphs [0001], [0053] * <br> ----- | 3 | |
| X | US 2019/018361 A1 (ISHIDA MASAHIRO [JP] ET AL) 17 January 2019 (2019-01-17) * figure 2 * <br> ----- | 1,2,7-9 | |
| X | US 2020/103006 A1 (TOMATSU YOSHIYA [JP]) 2 April 2020 (2020-04-02) | 10-15 | |
| Y | * figures 1-6 * <br> * paragraphs [0002], [0022] - [0030], [0031], [0048], [0093] * <br> ----- | 3 | |

**TECHNICAL FIELDS SEARCHED (IPC)**

G03G

The present search report has been drawn up for all claims

| Place of search | Date of completion of the search | Examiner |
|---|---|---|
| The Hague | 11 December 2025 | Nierhaus, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 7827

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2025

| Patent document cited in search report | | Publication date | Patent family member(s) | | Publication date |
|---|---|---|---|---|---|
| EP 2431188 | A1 | 21-03-2012 | CN | 102402152 A | 04-04-2012 |
| | | | EP | 2431188 A1 | 21-03-2012 |
| | | | JP | 5874953 B2 | 02-03-2016 |
| | | | JP | 2012208458 A | 25-10-2012 |
| | | | US | 2012060633 A1 | 15-03-2012 |
| US 2019018361 | A1 | 17-01-2019 | US | 2017030449 A1 | 02-02-2017 |
| | | | US | 2019018361 A1 | 17-01-2019 |
| US 2020103006 | A1 | 02-04-2020 | JP | 7151332 B2 | 12-10-2022 |
| | | | JP | 2020052306 A | 02-04-2020 |
| | | | US | 2020103006 A1 | 02-04-2020 |

EPO FORM P0459

For more details about this annex : see Official Journal of the European Patent Office, No. 12/82

## EP 4 703 805 A1

**Patent documents cited in the description**

- JP 2020154313 A